# EUROPÄISCHE PATENTSCHRIFT

(11) **EP 1 341 871 B1**
(45) Veröffentlichungstag und Bekanntmachung des Hinweises auf die Patenterteilung: **29.10.2008**
(21) Anmeldenummer: 01982299.8
(22) Anmeldetag: 17.09.2001
(51) Int. Cl.: C09K 19/32, C09K 19/42, C09K 19/44

(54) **FLÜSSIGKRISTALLINES MEDIUM**
LIQUID CRYSTALLINE MEDIUM
MILIEU A CRISTAUX LIQUIDES

(30) Priorität: 06.12.2000 DE 10060472
(43) Veröffentlichungstag der Anmeldung: 10.09.2003
(73) Patentinhaber: Merck Patent GmbH, 64293 Darmstadt (DE)
(72) Erfinder: HECKMEIER, Michael, 64625 Bensheim (DE); ENGEL, Martin, 64291 Darmstadt (DE); SCHULER, Brigitte, 63762 Grossostheim (DE); BREMER, Matthias, 64295 Darmstadt (DE); PAULUTH, Detlef, 64372 Ober-Ramstadt (DE)
(86) Internationale Anmeldenummer: PCT/EP2001/010699
(87) Internationale Veröffentlichungsnummer: WO 2002/046330

(56) Entgegenhaltungen:
- DE-A- 4 303 634
- DE-A- 4 409 526
- DE-A- 19 520 246
- DATABASE WPI Section Ch, Week 199442 Derwent Publications Ltd., London, GB; Class E14, AN 1994-338220 XP002188660 & JP 06 263663 A (ASAHI GLASS CO LTD), 20. September 1994 (1994-09-20)
- DATABASE WPI Section Ch, Week 198737 Derwent Publications Ltd., London, GB; Class E14, AN 1987-260922 XP002188661 & JP 62 181247 A (ASAHI GLASS CO LTD), 8. August 1987 (1987-08-08)
- DATABASE WPI Section Ch, Week 198740 Derwent Publications Ltd., London, GB; Class E14, AN 1987-280990 XP002188662 & JP 62 195355 A (ASAHI GLASS CO LTD), 28. August 1987 (1987-08-28)

## Beschreibung

Die vorliegende Erfindung betrifft ein flüssigkristallines Medium, dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("supertwisted nematic"), SBE-Zellen ("superbirefringence effect"), OMI-Zellen ("optical mode interference"), OCB-Zellen ("optically compensated bend mode") und IPS-Zellen ("in-plane-switching").

Die gebräuchlichsten Anzeigevorrichtungen beruhen auf dem Schadt-Helfrich-Effekt und besitzen eine verdrillt nematische Struktur, wie z.B. in TN- und STN-Zellen. Sie können als Multiplex- oder als Aktivmatrix-Anzeigen (AMD-TN, AMD = active matrix driven) betrieben werden.

Bei TN-Anzeigen sind Flüssigkristallmedien erwünscht, die in den Zellen folgende Vorteile ermöglichen: Einen erweiterten nematischen Phasenbereich (insbesondere zu tiefen Temperaturen), Schaltbarkeit bei extrem tiefen Temperaturen (out-door-use, Automobil, Avionik) sowie eine erhöhte Beständigkeit gegenüber UV-Strahlung (längere Lebensdauer). Mit den aus dem Stand der Technik zur Verfügung stehenden Medien ist es jedoch nicht möglich, diese Vorteile unter gleichzeitigem Erhalt der übrigen Parameter zu realisieren.

Bei den höher verdrillten STN-Anzeigen sind Flüssigkristallmedien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

OCB-Anzeigen enthalten eine Flüssigkristallschicht mit einer sogenannten "bend"-Struktur. Die "bend"-Zelle, auch bekannt als "π"-Zelle, wurde erstmals von P. Bos et al., SID 83 Digest, 30 (1983) für elektrisch kontrollierbare λ/2 -Verzögerungsplatten vorgeschlagen. Optische Anzeigen beruhend auf der OCB-Zelle wurden von Y. Yamaguchi, T. Miyashita und T. Uchida, SID 93 Digest, 277 (1993), T. Miyashita et al. in Proc. Eurodisplay, 149 (1993), J.Appl.Phys. 34, L177 (1995), SID 95 Digest, 797 (1995), und C.-L. Kuo et al., SID 94 Digest, 927 (1994) beschrieben. OCB-Zellen enthalten üblicherweise eine Flüssigkristallschicht mit homogener Randorientierung (d.h. parallel zu den Oberflächen) und positiver dielektrischer Anisotropie. Darüber hinaus enthalten die aus den oben genannten Dokumenten bekannten OCB-Anzeigen üblicherweise einen oder mehrere optische Retardationsfilme, um unerwünschte Lichtdurchlässigkeit der "bend"-Zelle im dunklen Zustand zu verringern. OCB-Anzeigen besitzen gegenüber den üblichen TN-Zellen einige Vorteile wie zum Beispiel einen weiteren Blickwinkel und kürzere Schaltzeiten.

Für OCB-Anzeigen werden flüssigkristalline Medien benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich sowie elektrische Gleich- und Wechselfelder. Ferner wird von technisch verwendbaren Flüssigkristallmedien für den OCB-Effekt eine flüssigkristalline Phase in einem geeigneten Temperaturbereich, eine relativ hohe Doppelbrechung, eine positive dielektrische Anisotropie, ein niedriger Wert für das Verhältnis der elastischen Konstanten K₃/K₁ und eine niedrige Viskosität gefordert. Für OCB-Anzeigen besteht somit ein großer Bedarf nach Flüssigkristallmedien, die insbesondere hohe Werte für die Doppelbrechung und die dielektrische Anisotropie und gleichzeitig niedrige Viskositäten zeigen.

Neben den bekannten Flüssigkristallanzeigen (TN, STN, OMI, AMD-TN, OCB), in denen die elektrischen Felder zur Umorientierung im wesentlichen senkrecht zur Flüssigkristallschicht erzeugt werden, existieren außerdem Anzeigen, in denen die elektrischen Signale so erzeugt werden, dass die elektrischen Felder eine signifikante Komponente parallel zur Flüssigkristallschicht aufweisen Eine solche, sogenannte IPS-Anzeige (engl. "in-plane-switching") ist beispielsweise in der internationalen Patentanmeldung WO 91/10936 offenbart. Die Prinzipien, solch eine Anzeige zu betreiben, werden zum Beispiel von R.A. Soref in Journal of Applied Physics, Vol. 45, Nr. 12, S. 5466-5468 (1974) beschrieben. In der EP 0 588 568 beispielsweise werden verschiedene Möglichkeiten der Gestaltung der Elektroden sowie zum Ansteuern solch einer Anzeige offenbart. DE 198 24 137 beschreibt ebenfalls verschiedene Ausführungsformen solcher IPS-Anzeigen. Flüssigkristalline Materialien für IPS-Anzeigen werden zum Beispiel in DE 195 28 104 beschrieben.

Die IPS-Anzeigen mit den bekannten flüssigkristallinen Medien sind durch unzureichende, lange Schaltzeiten und oft durch zu hohe Betriebsspannungen gekennzeichnet. Für IPS-Anzeigen besteht somit ein Bedarf an Flüssigkristallmedien, die diese Nachteile nicht oder nur in geringerem Maße aufweisen. Hierzu werden insbesondere flüssigkristalline Materialien benötigt, die neben einem ausreichenden Phasenbereich, geringer Tendenz zu Kristallisation bei tiefen Temperaturen, niedriger Doppelbrechung und ausreichendem elektrischen Widerstand insbesondere kleine Schwellenspannungen (V₁₀) und kleine Rotationsviskositäten (γ₁), die für die Schaltzeiten ausschlaggebend sind, besitzen.

Ebenso wie TN-Anzeigen können OCB- und IPS-Anzeigen auch als Matrix-Anzeigen betrieben werden.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet. Im Falle von OCB-Anzeigen wurden auch Reflektivanzeigen beispielsweise von T. Uchida, T. Ishinabe und M. Suzuki in SID 96 Digest, 618 (1996) vorgeschlagen.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Für Matrix-Flüssigkristallanzeigen mit integrierten nicht-linearen Elementen zur Schaltung einzelner Bildpunkte (MFK-Anzeigen) sind Flüssigkristallmedien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

MFK-Anzeigen eignen sich insbesondere für TV-Anwendungen (z.B. Taschenfemseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Abnahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Neben Flüssigkristallanzeigen, die eine Hintergrundbeleuchtung verwenden, so transmissiv und gegebenenfalls transflektiv betrieben werde, sind besonders auch reflektive Flüssigkristallanzeigen interessant. Diese reflektiven Flüssigkristallanzeigen benutzen das Umgebungslicht zur Informationsdarstellung. somit verbrauchen Sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive anzeigen auch bei hellen Umgebungsverhältnissen noch gut abzulesen. Dies ist bereits von einfachen reflektiven TN-Anzeigen, wie sie in z. B. Armbanduhren und Taschenrechnem verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu erreichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Generell müssen Flüssigkristallmaterialien für die oben genannten Anzeigentypen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

In JP S 62-181247 (A), JP S 62-195355 (A), JP H 06-2637663, DE 43 03 634 A1, DE 44 09 526 A1 und DE 195 20 246 A1 werden Indan-Derivate im Zusammehang mit flüssigkristallinen medien erwähnt.

In keiner der bisher bekannten Reihen von Verbindungen mit flüssigkristalliner Phase gibt es eine Einzelverbindung, die allen oben genannten Erfordernissen entspricht. Es werden daher in der Regel Mischungen von 2 bis 25, vorzugsweise 3 bis 18 Verbindungen hergestellt, um als Flüssigkristallphasen verwendbare Substanzen zu erhalten. Optimale Phasen konnten jedoch auf diese Weise nicht leicht hergestellt werden, da bisher keine Flüssigkristallmaterialien mit hoher Doppelbrechung, positiver dielektrischer Anisotropie und hohem Klärpunkt bei gleichzeitig niedriger Rotationsviskosität zur Verfügung standen.

Der Erfindung liegt die Aufgabe zugrunde, flüssigkristalline Medien insbesondere für die oben genannten MFK-, TN-, STN-, OCB- und IPS-Anzeigen bereitzustellen, die den oben genannten Anforderungen genügen, die oben angegebenen Nachteile nicht oder nur in geringerem Maße aufweisen, und vorzugsweise gleichzeitig sehr hohe spezifische Widerstände und niedrige Schwellenspannungen besitzen.

Es wurde nun gefunden, dass die oben beschriebenen Aufgaben gelöst werden können, wenn man in Anzeigen erfindungsgemäße Medien verwendet.

Gegenstand der Erfindung ist somit ein flüssigkristallines Medium auf der Basis eines Gemisches von polaren Verbindungen, dadurch gekennzeichnet, dass es eine oder mehrere Verbindungen der Formel I enthält, 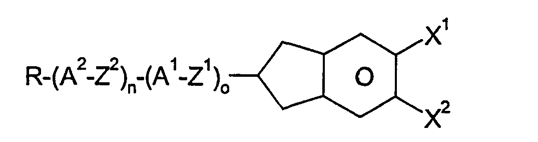 worin
- R: F, Cl, Br, I, CN, NCS, SF₅ oder einen unsubstituierten, einfach durch CN oder CF₃ oder ein- oder mehrfach durch Halogen substituierten Alkylrest mit 1 bis 12 C-Atomen, wobei auch ein oder zwei nicht benachbarte CH₂-Gruppen durch -O-, -CH=CH-, -CF=CF-, -C≡C-, -CO-, -OCO- oder -COO- so ersetzt sein können, dass O-Atome nicht direkt miteinander verknüpft sind,
- A¹ und A²: jeweils unabhängig voneinander 1,4-Phenylen, worin auch eine oder zwei CH-Gruppen durch N ersetzt sein können, und welches auch durch L ein- oder mehrfach substituiert sein kann, trans-1,4-Cyclohexylen, worin auch eine oder mehrere nicht benachbarte CH₂-Gruppen durch -O- und/oder -S- ersetzt sein können, 1,4-Cyclohexenylen, 1,4-Bicyclo(2,2,2)-octylen, Piperidin-1,4-diyl, Naphthalin-2,6-diyl, Decahydronaphthalin-2,6-diyl oder 1,2,3,4-Tetrahydronaphthalin-2,6-diyl,
- L: F, Cl, Br, I, CN, NCS, SF₅ oder Alkyl, Alkoxy, Alkylcarbonyl, Alkylcarbonyloxy, Alkoxycarbonyl, Alkenyl oder Oxaalkenyl mit 1 bis 3 C-Atomen, worin auch ein oder mehrere H-Atome durch F oder Cl ersetzt sein können,
- Z¹ und Z²: jeweils unabhängig voneinander -CH₂O-, -OCH₂-, -CF₂O-, -OCF₂-, -COO-, -OCO-, -CF₂CF₂-, -CH₂CH₂-, -(CH₂)₄-, -(CH₂)₃O-, -O(CH₂)₃-, -CF₂CH₂-, -CH=CH-, -CH=CF-, -CF=CF-, -C≡C- oder eine Einfachbindung,
- X¹ und X²: jeweils unabhängig voneinander F, Cl, Br, I, CN, NCS, SF₅ oder Alkyl, Alkoxy, Alkylcarbonyl, Alkylcarbonyloxy, Alkoxycarbonyl, Alkenyl oder Oxaalkenyl mit bis zu 5 C-Atomen, worin auch ein oder mehrere H-Atome durch F oder Cl ersetzt sein können, einer der Reste X¹ und X² auch H oder R,
- n und o: jeweils unabhängig voneinander 0, 1 oder 2, wobei n + o ≤ 3 ist,
bedeuten,
und
eine oder mehrere Verbindungen ausgewählt aus der Gruppe bestehend aus den allgemeinen Formeln II, III, IV, V, VI und VII, 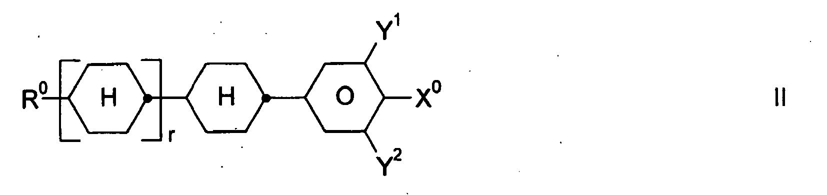 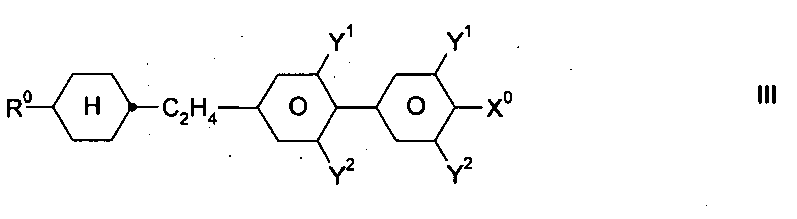 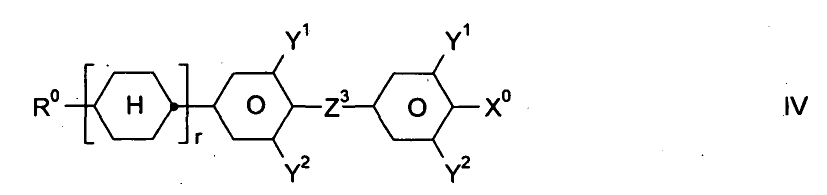 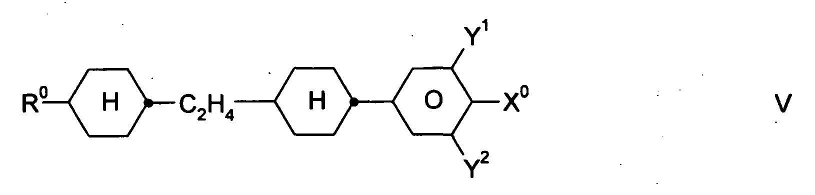 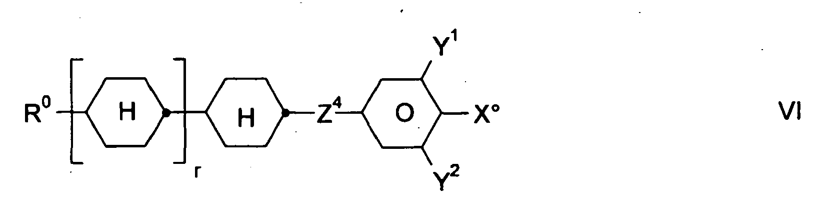 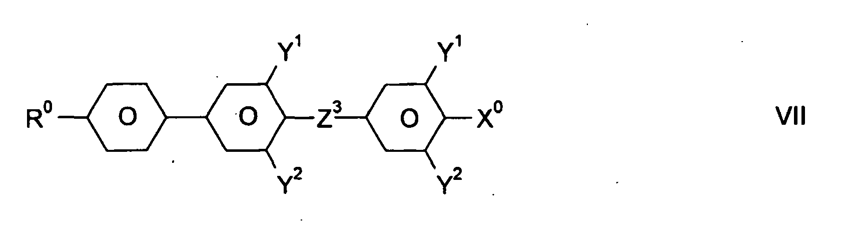 worin
- R⁰: n-Alkyl, Alkoxy, Fluoralkyl, Alkenyl oder Oxaalkenyl mit jeweils bis zu 9 C-Atomen,
- Z³: -COO-, -CF₂O-, -C₂F₄- oder eine Einfachbindung,
- Z⁴: -COO-, -CF₂O-, -C₂F₄- oder -C₂H₄-,
- X⁰: F, Cl, halogeniertes Alkyl, Alkenyl oder Alkoxy mit bis zu 6 C-Atomen,
- Y¹ und Y²: jeweils F, und
- r: 0 oder 1
bedeuten,
enthält.

Die Verbindungen der Formel I besitzen niedrige Rotationsviskositäten, bei gleichzeitig günstigen Klärpunkten und hoher dielektrischer Anisotropie Δε, und bewirken in den erfindungsgemäßen Medien eine Verringerung der Schwellenspannung bei gleichzeitiger Optimierung des Tieftemperaturverhaltens. Sie eignen sich besonders für einen Einsatz in TFT-TN-Anzeigen mit allen gängigen Operationsspannungen (Treiberspannung von 5 V, 4 V, 3,3 V und 2,5 V), insbesondere für TFT-TN-Anzeigen mit niedrigen Schwellenspannungen (Treiberspannung von 2,5 und 3,3 V), sowie aufgrund ihrer günstigen Werte der Doppelbrechung für TN-Anzeigen im ersten Transmissionsminimum nach Gooch und Tarry [C.H. Gooch und H.A. Tarry, Electron. Lett. 10, 2-4, 1974 und Appl. Phys., Vol. 8, 1575-1584, 1975].

Die Verbindungen der Formel I besitzen einen breiten Anwendungsbereich. Diese Verbindungen können als Basismaterialien dienen, aus denen flüssigkristalline Medien zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formel I sind in reinem Zustand farblos und bilden flüssigkristalline Mesophasen in einem für die elektrooptische Verwendung günstig gelegenen Temperaturbereich. Chemisch, thermisch und gegen Licht sind sie stabil. Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Einige Verbindungen der Formel I sowie ihre Herstellung sind aus DE 43 03 634 und DE 44 09 526 bekannt.

Besonders bevorzugt sind Verbindungen der Formel I, worin n + o 0 oder 1 bedeutet.

Ferner bevorzugt sind Verbindungen der Formel I und deren Unterformeln, worin einer oder beide Reste X¹ und X² F, Cl, CN oder fluoriertes Alkyl oder Alkoxy mit 1 bis 3 C-Atomen, insbesondere CF₃, OCF₃, CF₂H oder OCF₂H, ferner OCH₃, OC₂H₅ bedeuten.

Ferner bevorzugt sind Verbindungen der Formel I und deren Unterformeln, worin Z¹ und Z² -OCO-, -COO-, -CF₂O-, -OCF₂-, -CH₂CH₂-, -CF₂CF₂- oder eine Einfachbindung bedeuten.

Ferner bevorzugt sind Verbindungen der Formel I und deren Unterformeln, worin R Alkyl oder Alkoxy mit 1 bis 8 C-Atomen bedeutet.

Die Verbindungen der folgenden Unterformeln sind besonders bevorzugt. Darin bedeuten Cyc einen 1,4-Cyclohexylenrest welcher auch in 1- und/oder 4- Position durch F, Cl, CN oder CF₃ substituiert sein kann, Dio einen 1,3-Dioxan-2,5-diylrest, Phe einen 1,4-Phenylenrest, welcher in 2-, 3- und/oder 5-Position mit L substituiert sein kann. Z besitzt eine der für Z¹ in Formel I angegeben Bedeutungen. InX¹X² bedeutet einen in 5-Position mit X¹ und in 6-Position mit X² substituierten Indan-2-yl-Rest gemäß Formel I. L, R, X¹ und X² besitzen die in Formel I angegeben Bedeutung.

| | |
|---|---|
| R-Cyc-Z¹-InX¹X² | I1 |
| R-Phe-Z¹-InX¹X² | I2 |
| R-Dio-Z¹-InX¹X² | I3 |
| R-Cyc-Z²-Phe-Z¹-InX¹X² | I4 |
| R-Cyc-Z²-Cyc-Z¹-InX¹X² | I5 |
| R-Phe-Z²-Cyc-Z¹-InX¹X² | I6 |
| R-Phe-Z²-Phe-Z¹-InX¹X² | I7 |
| R-Cyc-Z²-Dio-Z¹-InX¹X² | I8 |
| R-Dio-Z²-Cyc-Z¹-InX¹X² | I9 |
| R-Dio-Z²-Dio-Z¹-InX¹X² | I10 |
| R-Phe-Z²-Dio-Z¹-InX¹X² | I11 |
| R-Dio-Z²-Phe-Z¹-InX¹X² | I12 |
| R-Cyc-Z²-Cyc-Z¹-Cyc-Z¹-InX¹X² | I13 |
| R-Cyc-Z²-Cyc-Z¹-Phe-Z¹-InX¹X² | I14 |
| R-Phe-Z²-Cyc-Z¹-Cyc-Z¹-InX¹X² | I15 |
| R-Cyc-Z²-Phe-Z¹-Phe-Z¹-InX¹X² | I16 |
| R-Phe-Z²-Phe-Z¹-Cyc-Z¹-InX¹X² | I17 |
| R-Phe-Z²-Phe-Z¹-Phe-Z¹-InX¹X² | 118 |
| R-Cyc-Z²-Cyc-Z¹-Dio-Z¹-InX¹X² | I19 |
| R-Dio-Z²-Cyc-Z¹-Cyc-Z¹-InX¹X² | I20 |
| R-Cyc-Z²-Dio-Z¹-Dio-Z¹-InX¹X² | I21 |
| R-Dio-Z²-Dio-Z¹-Cyc-Z¹-InX¹X² | I22 |
| R-Dio-Z²-Dio-Z¹-Dio-Z¹-InX¹X² | I23 |
| R-Dio-Z²-Dio-Z¹-Phe-Z¹-InX¹X² | I24 |
| R-Dio-Z²-Phe-Z¹-Phe-Z¹-InX¹X² | I25 |
| R-InX¹X² | I26 |

Besonders bevorzugt sind Verbindungen der Unterformeln I1, I2, I4, I5, I6 und I7 und I26.

Ganz besonders bevorzugte Verbindungen der Formel I sind ausgewählt aus den folgenden Unterformeln la bis le: 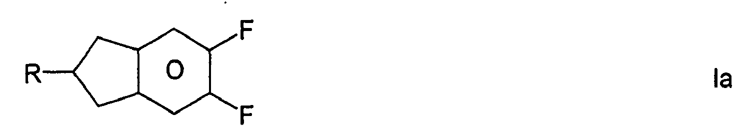 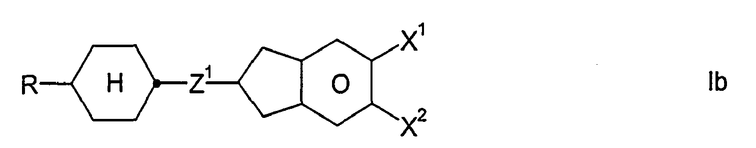 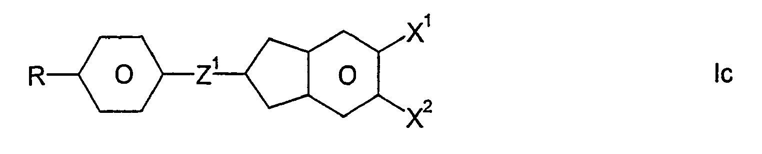 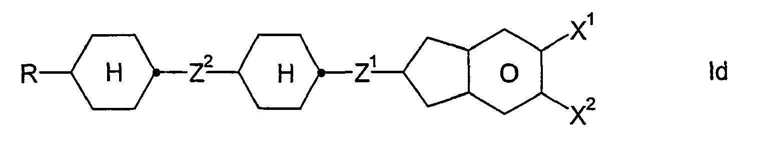 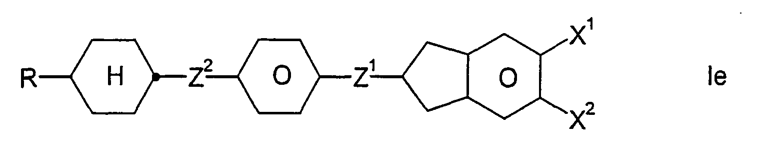 worin R, Z¹, Z², X¹ und X² die in Formel I angegebene Bedeutung besitzen.

Besonders bevorzugt sind Verbindungen der Formel la, Ib und Id, insbesondere solche, worin X¹ und X² F, Z¹ eine Einfachbindung und R Alkyl oder Alkoxy mit 1 bis 8 C-Atomen bedeuten.

Ferner bevorzugt sind Verbindungen der Formeln I und la bis Id, worin
- X¹ und X² F, Cl, CN, CF₃, OCF₃, CF₂H oder OCF₂H bedeuten,
- einer der Reste X¹ und X² F, CN, Cl, CF₃ oder OCF₃ und der andere H oder Alkyl, Alkoxy, Alkylcarbonyl, Alkoxycarbonyl oder Alkylcarbonyloxy mit 1 bis 8 C-Atomen bedeutet,
- Z¹ und Z² eine Einfachbindung bedeuten,
- einer oder beide Reste Z¹ und Z² -CF₂O-, -OCF₂- oder -CF₂CF₂-bedeuten,
- R Alkyl oder Alkoxy mit 1 bis 8 C-Atomen bedeutet.

Der Begriff "fluoriertes Alkyl oder Alkoxy mit 1 bis 3 C-Atomen" bedeutet vorzugsweise CF₃, OCF₃, CFH₂, OCFH₂, CF₂H, OCF₂H, C₂F₅, OC₂F₅, CFHCF₃, CFHCF₂H, CFHCFH₂, CH₂CF₃, CH₂CF₂H, CH₂CFH₂, CF₂CF₂H, CF₂CFH₂, OCFHCF₃, OCFHCF₂H, OCFHCFH₂, OCH₂CF₃, OCH₂CF₂H, OCH₂CFH₂, OCF₂CF₂H, OCF₂CFH₂, C₃F₇ oder OC₃F₇, insbesondere CF₃, OCF₃, CF₂H, OCF₂H, C₂F₅, OC₂F₅, CFHCF₃, CFHCF₂H, CFHCFH₂, CF₂CF₂H, CF₂CFH₂, OCFHCF₃, OCFHCF₂H, OCFHCFH₂, OCF₂CF₂H, OCF₂CFH₂, C₃F₇ oder OC₃F₇, besonders bevorzugt OCF₃ oder OCF₂H.

Halogen bedeutet vorzugsweise F oder Cl, insbesondere F.

Falls R einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl.

Falls R einen Alkylrest bedeutet, in dem eine CH₂-Gruppe durch -CH=CH-ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3-oder Pent-4-enyl, Hex-1-, 2-, 3-, 4- oder Hex-5-enyl, Hept-1-, 2-, 3-, 4-, 5-oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome.

Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 3-Acetyloxypropyl, 3-Propionyloxypropyl, 4-Acetyloxybutyl, Methoxycarbonyl, Ethoxycarbonyl, Propoxycarbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)ethyl, 3-(Methoxycarbonyl)propyl, 3-(Ethoxycarbonyl)propyl, 4-(Methoxycarbonyl)-butyl.

Falls R einen Alkylrest bedeutet, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 13 C-Atome. Er bedeutet demnach besonders Acryloyloxymethyl, 2-Acryloyloxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyloxynonyl, 10-Acryloyloxydecyl, Methacryloyloxymethyl, 2-Methacryloyloxyethyl, 3-Methacryloyloxypropyl, 4-Methacryloyloxybutyl, 5-Methacryloyloxypentyl, 6-Methacryloyloxyhexyl, 7-Methacryloyloxyheptyl, 8-Methacryloyloxyoctyl, 9-Methacryloyloxynonyl.

Falls R einen einfach durch CN oder CF₃ substituierten Alkyl- oder Alkenylrest bedeutet, so ist dieser Rest vorzugsweise geradkettig. Die Substitution durch CN oder CF₃ ist in beliebiger Position.

Falls R einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Falls R einen Alkylrest darstellt, in dem zwei oder mehr CH₂-Gruppen durch -O- und/oder -CO-O- ersetzt sind, so kann dieser geradkettig oder verzweigt sein. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxycarbonyl)-methyl, 2,2-Bis-(methoxycarbonyl)-ethyl, 3,3-Bis-(methoxycarbonyl)-propyl, 4,4-Bis-(methoxycarbonyl)-butyl, 5,5-Bis-(methoxycarbonyl)-pentyl, 6,6-Bis-(methoxycarbonyl)-hexyl, 7,7-Bis-(methoxycarbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Gegenstand der Erfindung sind auch elektrooptische Anzeigen enthaltend erfindungsgemäße Flüssigkristallmedien, insbesondere TN-, STN-, OCB-, IPS- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand. Ein weiterer Gegenstand der Erfindung ist die Verwendung der erfindungsgemäßen Flüssigkristallmedien für elektrooptische Zwecke.

Die erfindungsgemäßen Flüssigkristallmischungen ermöglichen eine bedeutende Erweiterung des zur Verfügung stehenden Parameterraumes. So übertreffen die erzielbaren Kombinationen aus Klärpunkt, Viskosität bei tiefer Temperatur, thermischer und UV-Stabilität und dielektrischer Anisotropie bei weitem bisherige Materialien aus dem Stand der Technik.

Die Forderung nach hohem Klärpunkt, nematischer Phase bei tiefer Temperatur, hohem Δε und gleichzeitig niedriger Visokosität konnte bislang nur unzureichend erfüllt werden. Bisher bekannte Mischungen weisen zwar vergleichbar hohe Werte für den Klärpunkt und für Δε sowie eine günstige Doppelbrechung auf, besitzen aber immer noch nicht ausreichend niedrige Werte für die Rotationsviskosität γ₁.

Andere Mischungs-systeme besitzen vergleichbare Viskositäten und Werte von Δε, weisen jedoch nur Klärpunkte in der Gegend von 60 °C auf.

Die erfindungsgemäßen Flüssigkristallmischungen ermöglichen es bei Beibehaltung der nematischen Phase bis -20 °C und bevorzugt bis -30 °C, besonders bevorzugt bis -40 °C, Klärpunkte oberhalb 75°, vorzugsweise oberhalb 80°, besonders bevorzugt oberhalb 85 °C, gleichzeitig dielektrische Anisotropiewerte Δε ≥ 5, vorzugsweise ≥ 7 und einen hohen Wert für den spezifischen Widerstand zu erreichen, wodurch hervorragende STN- und MKF-Anzeigen erzielt werden können. Insbesondere sind die Mischungen durch kleine Operationsspannungen gekennzeichnet. Die TN-Schwellen sind < 2,0 V, vorzugsweise 1,8 V, besonders bevorzugt < 1,6 V, ganz besonders bevorzugt < 1,4 V.

Es versteht sich, dass durch geeignete Wahl der Komponenten der erfindungsgemäßen Mischungen auch höhere Klärpunkte (z.B. oberhalb 110°) bei höheren Schwellenspannung oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringeren Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975],, wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Rotationsviskosität γ₁ bei 20 °C ist vorzugsweise < 160 mPa.s, besonders bevorzugt < 140 mPa.s. Der nematische Phasenbereich ist vorzugsweise mindestens 90°, insbesondere mindestens 100°. Vorzugsweise erstreckt sich dieser Bereich mindestens von -20° bis +80°.

Messungen des "Capacity Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel 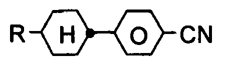 oder Ester der Formel

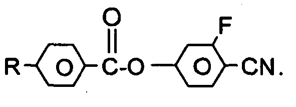

Außerdem hat sich gezeigt, dass erfindungsgemäße Mischungen enthaltend Verbindungen der Formel I einen höheren Klärpunkt und höheres Δε aufweisen als analoge Mischungen enthaltend Cyanophenylcyclohexane der o.g. Formel. Im Vergleich zu den letztgenannten Mischungen weisen die erfindungsgemäßen Mischungen außerdem ein kleineres Δn auf, was für viele Anwendungen, insbesondere reflektive und transflektive, vorteilhaft ist.

Auch die UV-Stabilität der erfindungsgemäßen Mischungen ist erheblich besser, d. h. sie zeigen eine deutlich kleinere Abnahme des HR unter UV-Belastung.

Der Anteil der Verbindungen der Formel I im Gesamtgemisch der erfindungsgemäßen Medien ist vorzugsweise 2-55 %, vorzugsweise 3-35 % und besonders bevorzugt 5-15 %.

Die einzelnen Verbindungen der nachfolgenden Formeln und deren Unterformeln, die in den erfindungsgemäßen Medien verwendet werden können, sind entweder bekannt, oder sie können analog zu den bekannten Verbindungen hergestellt werden.

Bevorzugte Ausführungsformen sind im folgenden angegeben:
- Die Verbindungen der Formel II sind vorzugsweise ausgewählt aus der folgenden Gruppe: 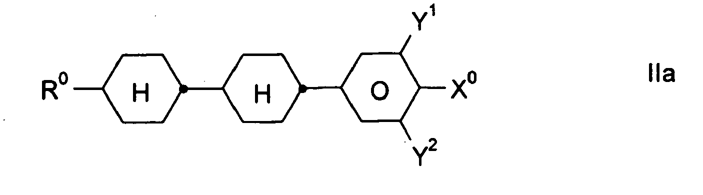 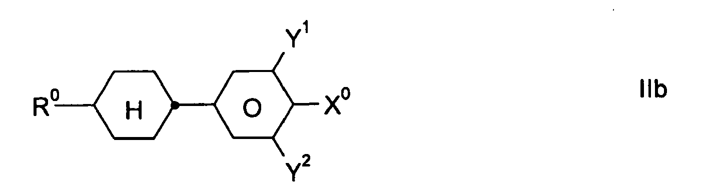
worin R⁰ und X⁰ die oben angegebene Bedeutung haben, R⁰ besonders bevorzugt n-Alkyl mit 1 bis 8 C-Atomen oder Alkenyl mit 2 bis 7 C-Atomen und X⁰ besonders bevorzugt F, Cl, CF₃, OCF₃ oder OCHF₂ bedeuten;
- Die Verbindungen der Formel IV sind vorzugsweise ausgewählt aus der folgenden Gruppe 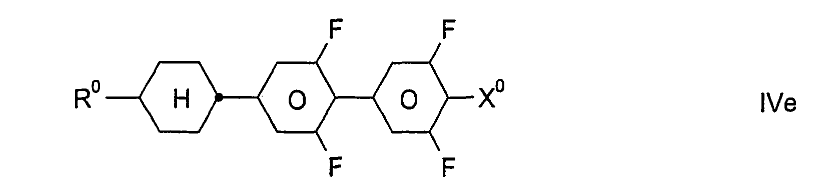 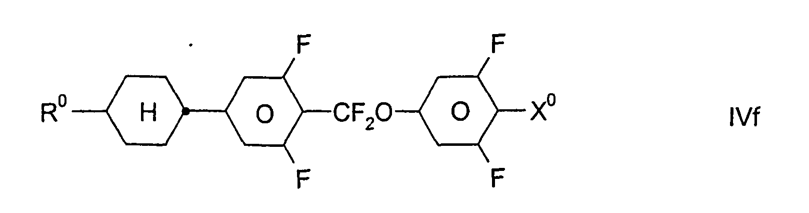 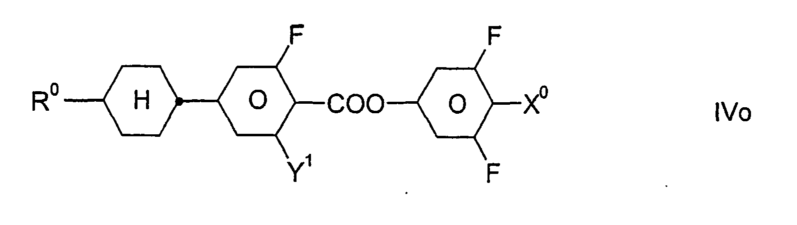
worin R⁰, X⁰ und Y¹ die oben angegebene Bedeutung haben. R⁰ bedeutet besonders bevorzugt n-Alkyl mit 1 bis 8 C-Atomen oder Alkenyl mit 2 bis 7 C-Atomen. X⁰ bedeutet bevorzugt OCF₃, OCHF₂ oder F.
- Die Verbindungen der Formel VII sind vorzugsweise ausgewählt aus der folgenden Gruppe 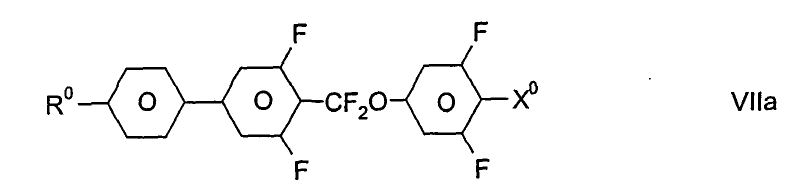 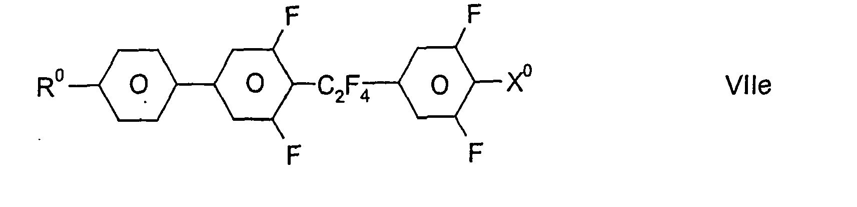
worin R⁰ und X⁰ die oben angegebene Bedeutung haben. R⁰ bedeutet besonders bevorzugt n-Alkyl mit 1 bis 8 C-Atomen oder Alkenyl mit 2 bis 7 C-Atomen. X⁰ bedeutet bevorzugt OCF₃ oder F, besonders bevorzugt F. Besonders bevorzugt sind Verbindungen der Formel VIIa ;
- Das Medium enthält zusätzlich eine oder mehrere Verbindungen ausgewählt aus der folgenden Gruppe: 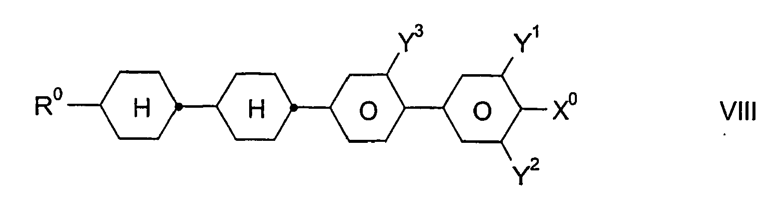 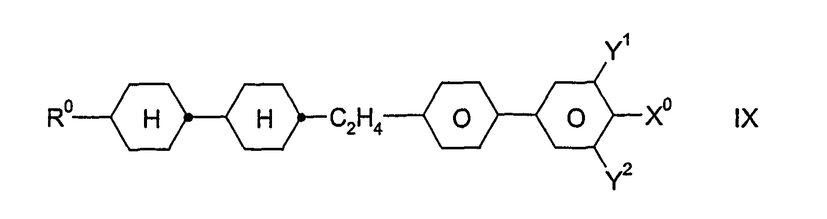 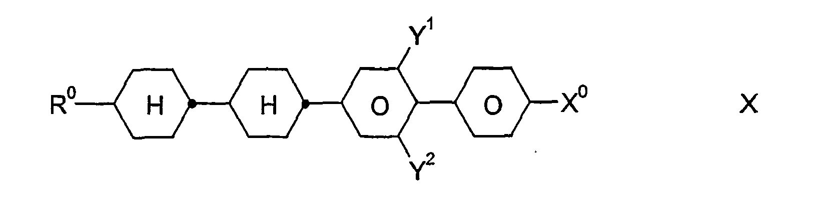 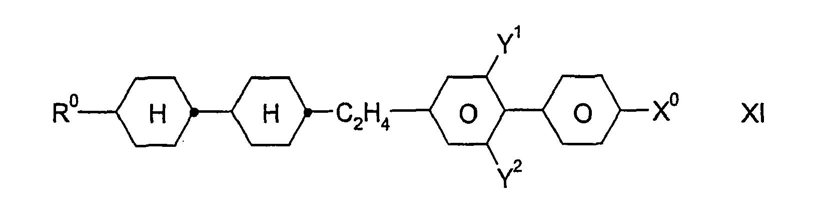 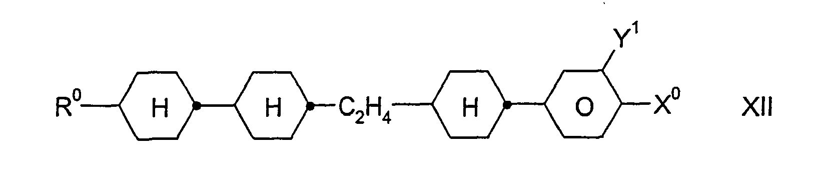 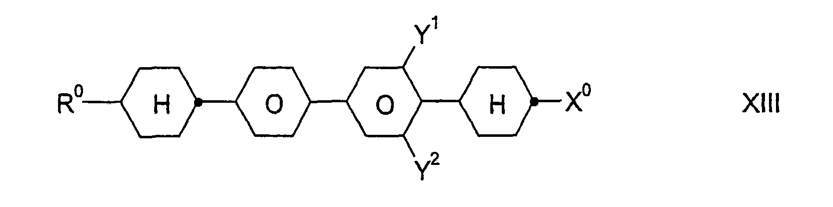 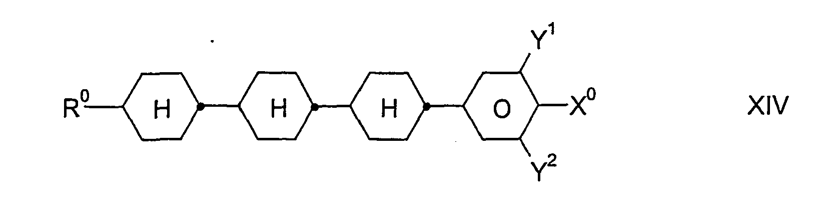
worin R⁰, X⁰, Y¹ und Y² jeweils unabhängig voneinander eine der oben angegebenen Bedeutungen haben. Y³ ist H oder F und X⁰ ist vorzugsweise F, Cl, CF₃, OCF₃, OCHF₂, Alkyl, Oxaalkyl, Fluoralkyl oder Alkenyl mit jeweils bis zu 6 C-Atomen. Besonders bevorzugt sind Verbindungen der Formel VIII, insbesondere solche, worin Y¹, Y², Y³ und X⁰ F bedeuten.
- Das Medium enthält weitere Verbindungen, vorzugsweise ausgewählt aus der folgenden Gruppe: 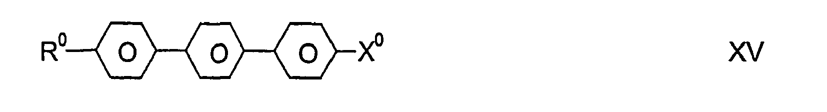 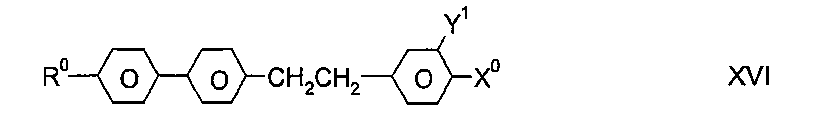 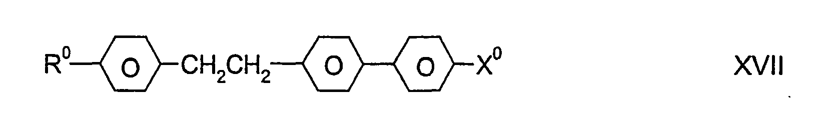 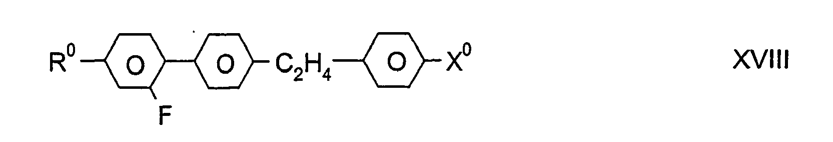
worin R⁰ und X⁰ die oben angegebene Bedeutung haben und die 1,4-Phenylenringe durch CN, Chlor oder Fluor substituiert sein können. Vorzugsweise sind die 1,4-Phenylenringe ein- oder mehrfach durch Fluoratome substituiert. In der Verbindung XVIII bedeutet X⁰ insbesondere bevorzugt F oder Cl.
- Das Medium enthält zusätzlich eine oder mehrere Verbindungen ausgewählt aus der folgenden Gruppe: 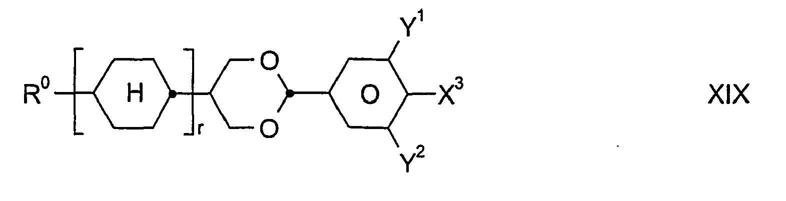 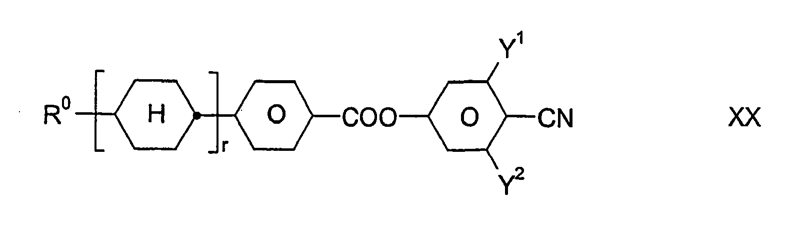
worin X³ eine der Bedeutungen von X⁰ besitzt oder CN oder NCS bedeutet und R⁰, X⁰, Y¹, Y² und r die oben angegebene Bedeutung besitzen.

Besonders bevorzugte Unterformeln aus der Gruppe der Verbindungen der Formeln XIX und XX sind: 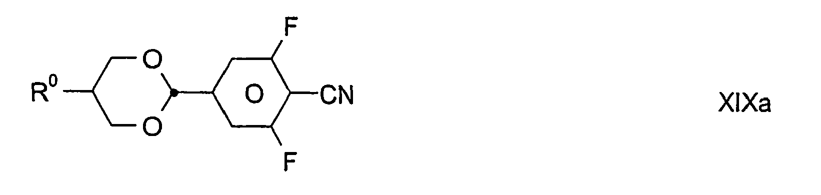 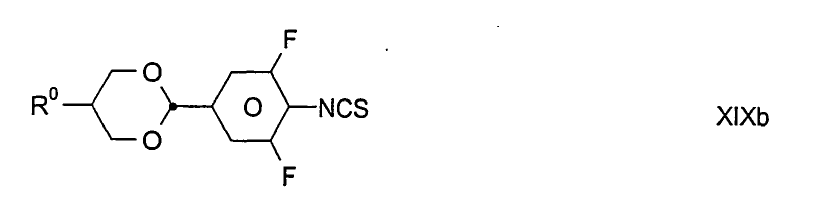 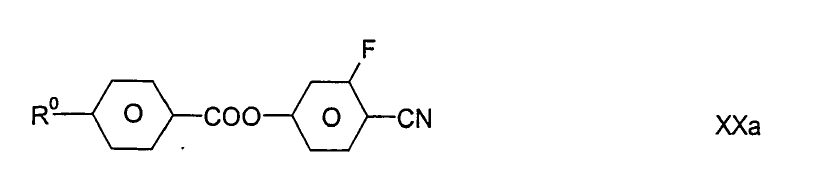 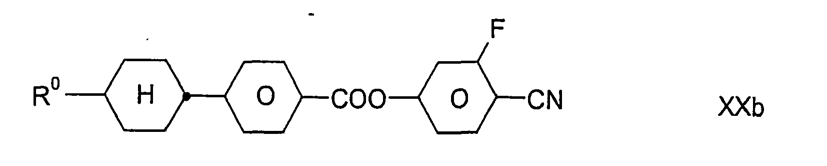 worin R⁰ die oben angegebene Bedeutung besitzt und besonders bevorzugt n-Alkyl mit 1 bis 8 C-Atomen oder Alkenyl mit 2 bis 7 C-Atomen bedeutet.
- Das Medium enthält vorzugsweise ein oder mehrere Dioxane der Formeln D1 und D2; 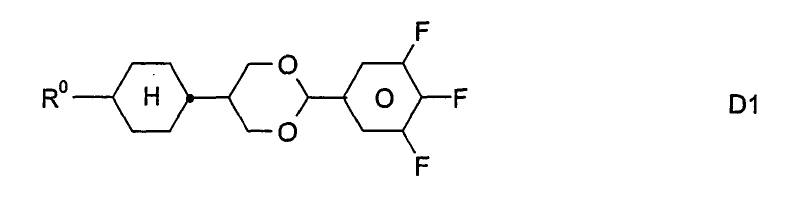 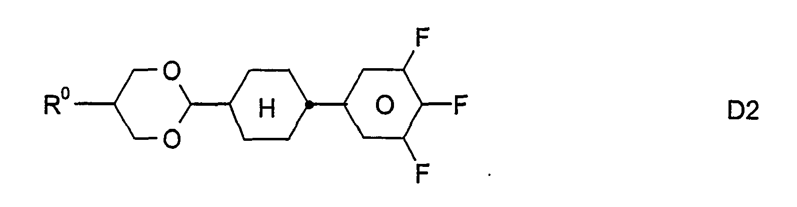
worin R⁰ die oben angegebene Bedeutung hat.
- Das Medium enthält zusätzlich eine oder mehrere Verbindungen ausgewählt aus der folgenden Gruppe: 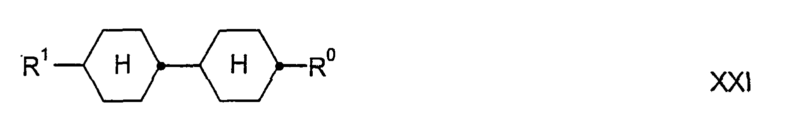 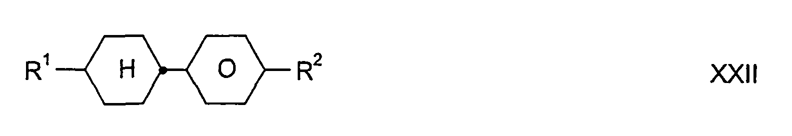 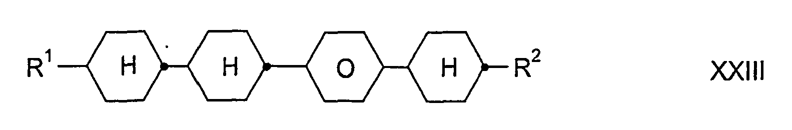 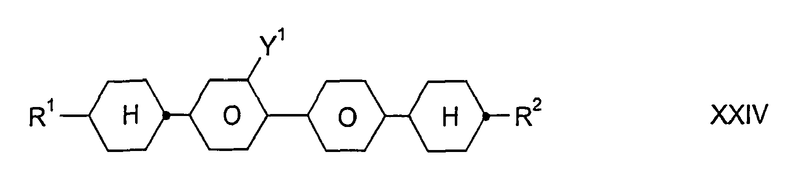 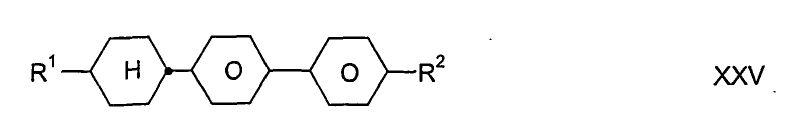 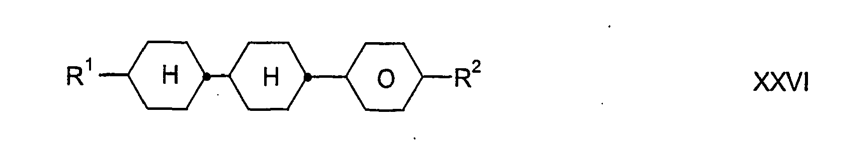 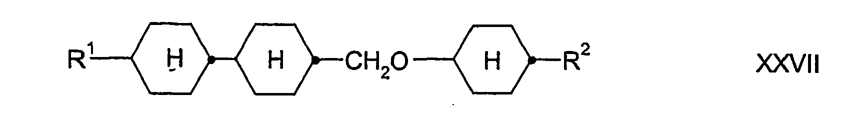
worin R⁰ und Y¹ die oben angegebene Bedeutung besitzen und R¹ und R² jeweils unabhängig voneinander Alkyl oder Alkoxy mit 1 bis 8 C-Atomen oder Alkenyl mit 2 bis 7 C-Atomen bedeuten.

In den Verbindungen der Formel XXII bis XXVII bedeuten R¹ und R² vorzugsweise Alkyl oder Alkoxy mit 1 bis 8 C-Atomen.

Besonders bevorzugt sind die Verbindungen ausgewählt aus der folgenden Gruppe: 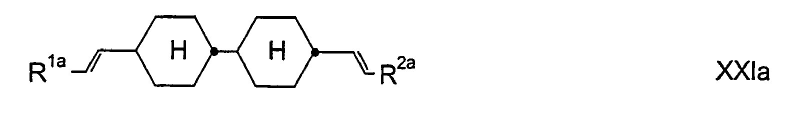 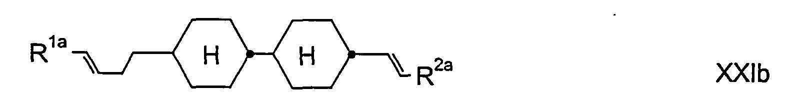 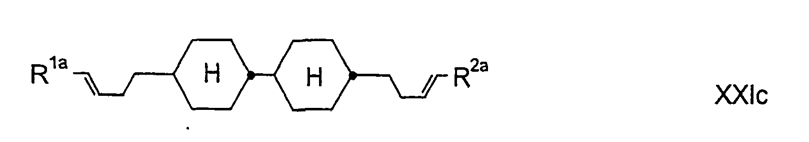 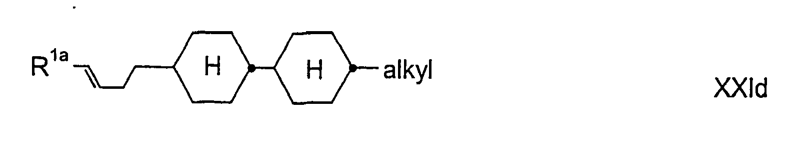 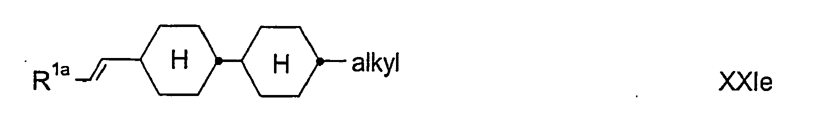 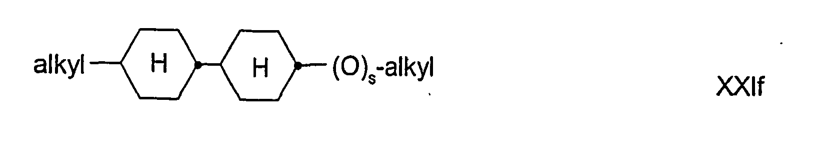 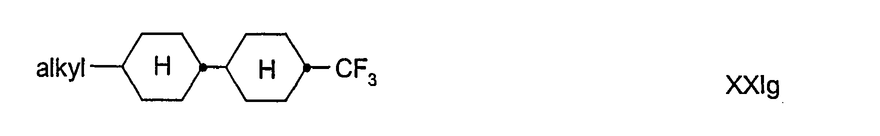 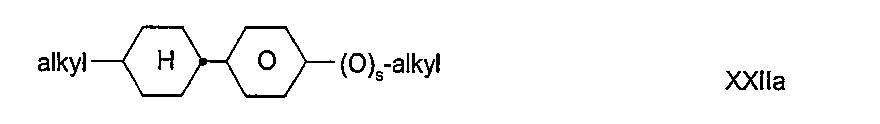 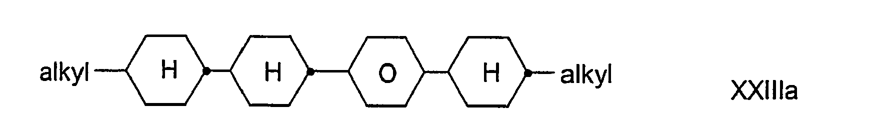 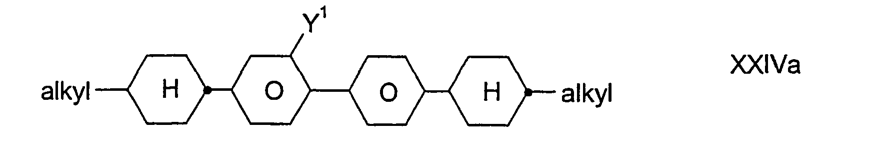 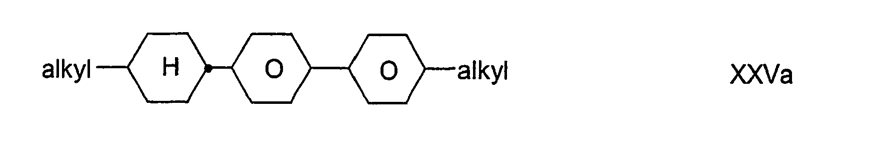 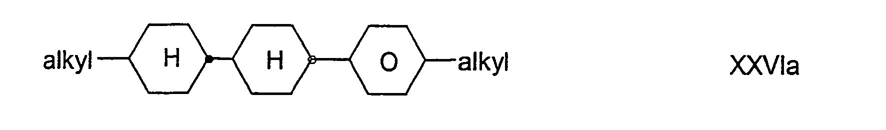 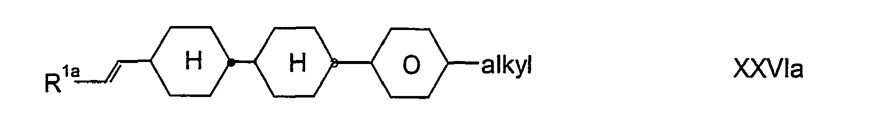 worin R^{1a} und R^{2a} jeweils unabhängig voneinander H, CH₃, C₂H₅ oder n-C₃H₇, alkyl eine Alkylgruppe mit 1 bis 7 C-Atomen, s 0 oder 1 und L H oder F bedeuten. 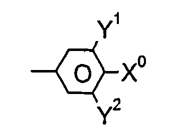 ist vorzugsweise 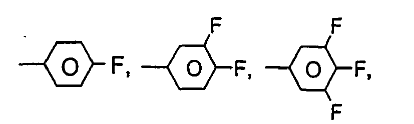 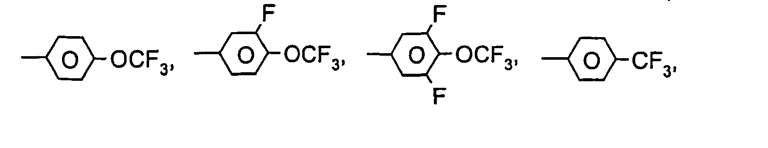 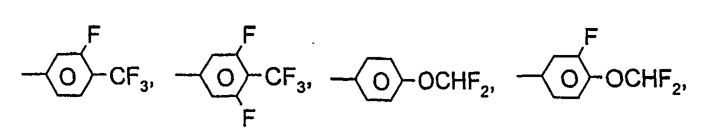 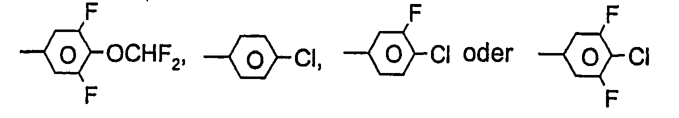
- R⁰ ist geradkettiges Alkyl oder Alkenyl mit 2 bis 7 C-Atomen;
- Das Medium enthält Verbindungen ausgewählt aus den Formeln II, III, IV, V, VI, VII, VIII, XIX, XX, XXI, XXII, XIII, XXIV und XXVII;
- Das Medium enthält eine oder mehrere Verbindungen ausgewählt aus den Formeln IIa, IIb, IVa, IVb, IVc, IVd und VIk, worin X⁰ F bedeutet,
- Das Medium enthält eine oder mehrere Verbindungen ausgewählt aus den Formeln IIa, IVp, Vlh und VIi, worin X⁰ OCF₃ oder OCHF₂ bedeutet,
- Das Gewichtsverhältnis I: (II + III + IV + V + VI + VII) ist vorzugsweise 1 : 10 bis 10: 1;
- Das Medium besteht im wesentlichen aus Verbindungen ausgewählt aus der Gruppe bestehend aus den allgemeinen Formeln I bis VIII und XIX bis XXIV;
- Das Medium enthält eine, zwei oder drei Verbindungen der Formel 1, vorzugsweise ausgewählt aus den Formeln la und Ic;
- Der Anteil an Verbindungen der Formel I beträgt im Gesamtgemisch 2 bis 55 Gew.-%, insbesondere 3 bis 35 Gew.-%, ganz besonders bevorzugt 5 bis 15 Gew.-%;
- Der Anteil an Verbindungen der Formeln I bis VII zusammen beträgt im Gesamtgemisch mindestens 50 Gew.-%;
- Der Anteil an Verbindungen der Formeln II bis VII und XIX bis XXVII im Gesamtgemisch beträgt 30 bis 95 Gew.-%.

Es wurde gefunden, dass bereits ein relativ geringer Anteil an Verbindungen der Formel I im Gemisch mit einer oder mehreren Verbindungen der Formel II, III, IV, V, VI und/oder VII zu einer beträchtlichen Erniedrigung der Schwellenspannung und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben ein oder mehrerer Verbindungen der Formel I ein oder mehrere Verbindungen der Formel IV enthalten, insbesondere Verbindungen der Formel IVa, IVb, IVc und IVd, worin X⁰ F oder OCF₃ bedeutet. Die Verbindungen der Formeln I bis VII sind farblos, stabil und untereinander und mit anderen Flüssigkristallmaterialien gut mischbar.

Der Ausdruck "Alkyl" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Besonders Alkenylgruppen sind C₂₋C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1 E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1 E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CₙH₂₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten K₃ (bend) und K₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von K₃/K₁ im Vergleich zu Alkyl- und Alkoxyresten.

Eine -CH₂CH₂-Gruppe führt im allgemeinen zu höheren Werten von K₃/K₁ im Vergleich zu einer einfachen Kovalenzbindung. Höhere Werte von K₃/K₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV + V + VI + VI hängt weitgehend von den gewünschten Eigenschaften, von der Wahl der Komponenten der Formeln I, II, III, IV, V, VI und/oder VII und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XXVII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XXVII ist.

In einer besonders bevorzugten Ausführungsform enthalten die erfindungsgemäßen Medien Verbindungen der Formel II bis VII (vorzugsweise II, III und/oder IV, insbesondere IVa), worin X⁰ F, OCF₃, OCHF₂, F, OCH=CF₂, OCF=CF₂ oder OCF₂-CF₂H bedeutet. Eine günstige synergistische Wirkung mit den Verbindungen der Formel I führt zu besonders vorteilhaften Eigenschaften. Insbesondere Mischungen enthaltend Verbindungen der Formel I und der Formeln IVa, IVb, IVc und IVd zeichnen sich durch ihre niedrigen Schwellenspannungen aus.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

In den folgenden Beispielen bedeutet C eine kristalline, S eine smektische, S_{C} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2-fachen Wert von V₁₀. Δn bezeichnet die optische Anisotropie und nₒ den Brechungsindex. Δε bezeichnet die dielektrische Anisotropie (Δε = ε_{∥} - ε_{⊥},
wobei ε_{∥} die Dielektrizitätskonstante parallel zu den Moleküllängsachsen und ε_{⊥} die Dielektrizitätskonstante senkrecht dazu bedeutet). Die elektrooptischen Daten wurden in einer TN-Zelle im 1. Minimum (d.h. bei einem d · Δn-Wert von 0,5) bei 20 °C gemessen, sofern nicht ausdrücklich etwas anderes angegeben wird. γ₁ bedeutet die Rotationsviskosität.

Die oben genannten Daten wurden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹, R2, L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-C₂H₂ₛ- | CN | H | H |
| nAm | CₙH₂ₙ₊₁ | COOCₘH₂ₘ₊₁ | H | H |
| nOCCF₂.F.F | CₙH₂ₙ₊₁ | OCH₂CF₂H | F | F |

Bevorzugte Mischungskomponenten finden sich in den Tabellen A und B.

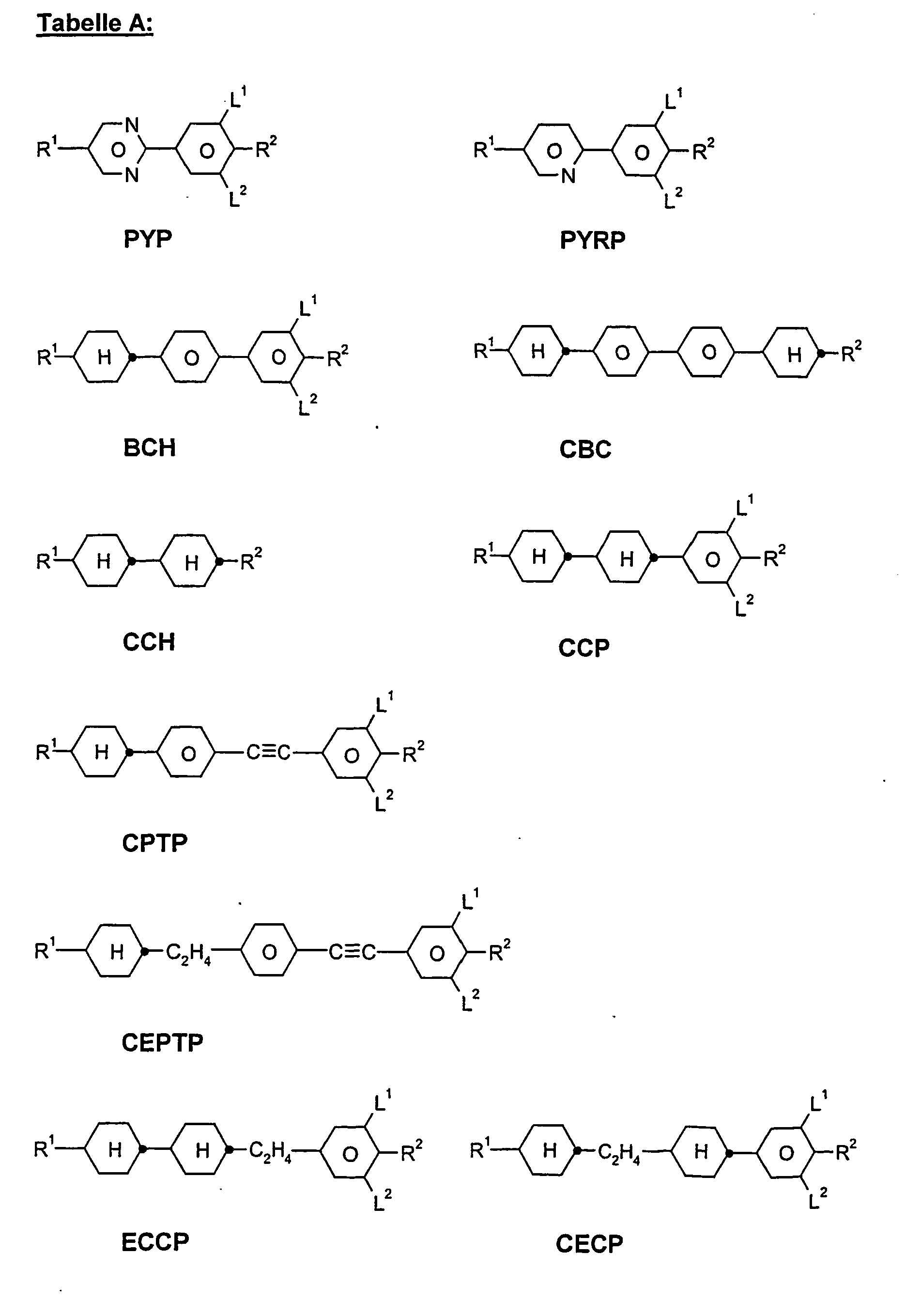

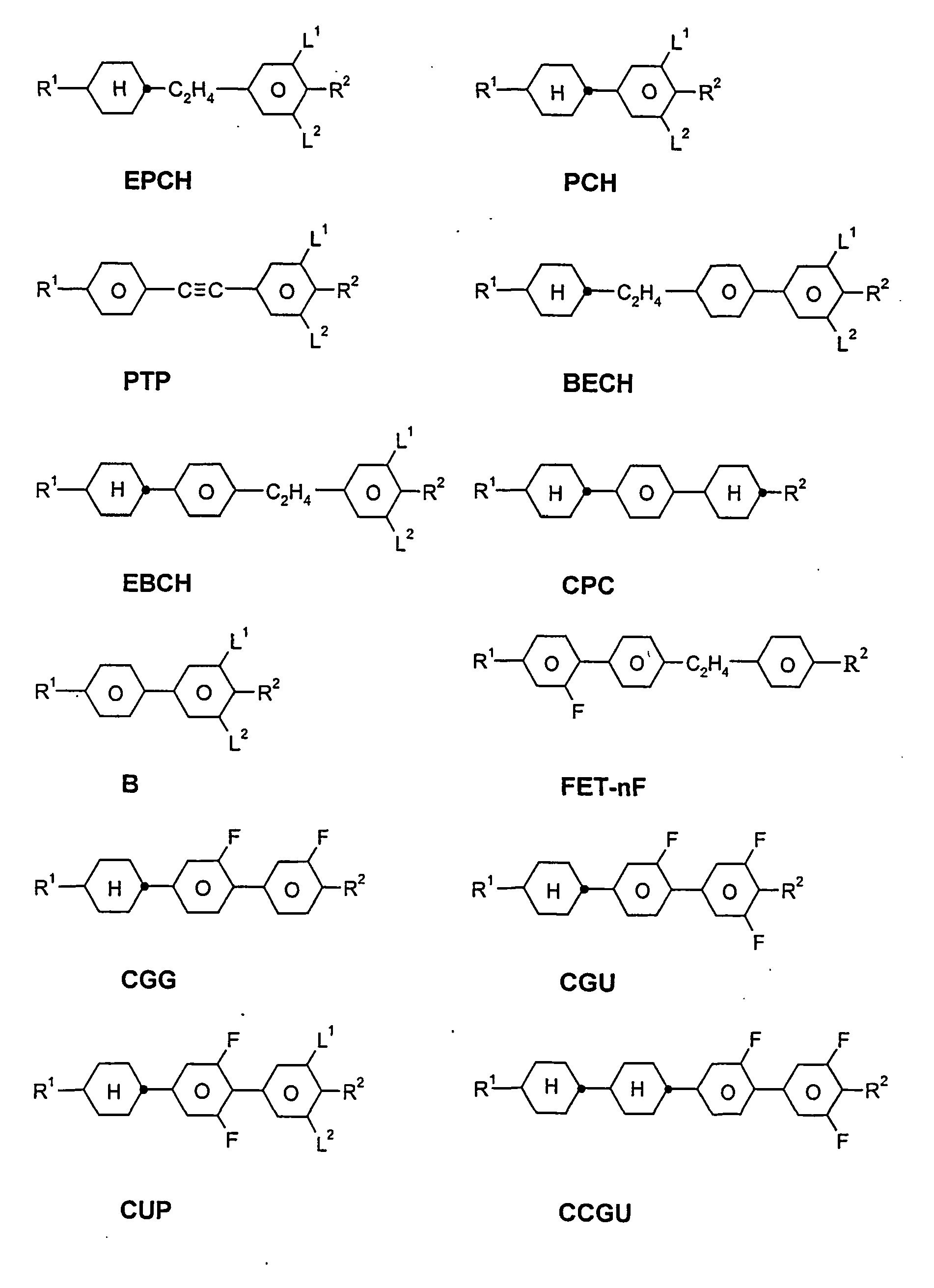

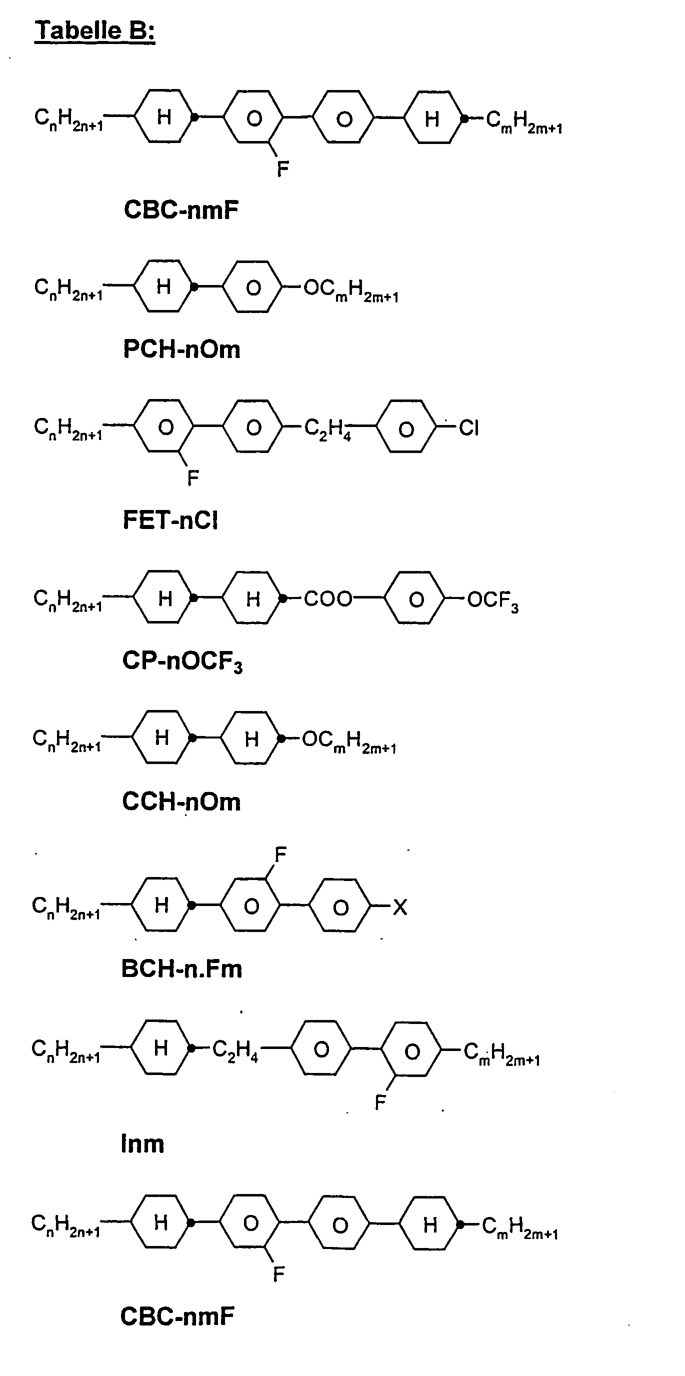

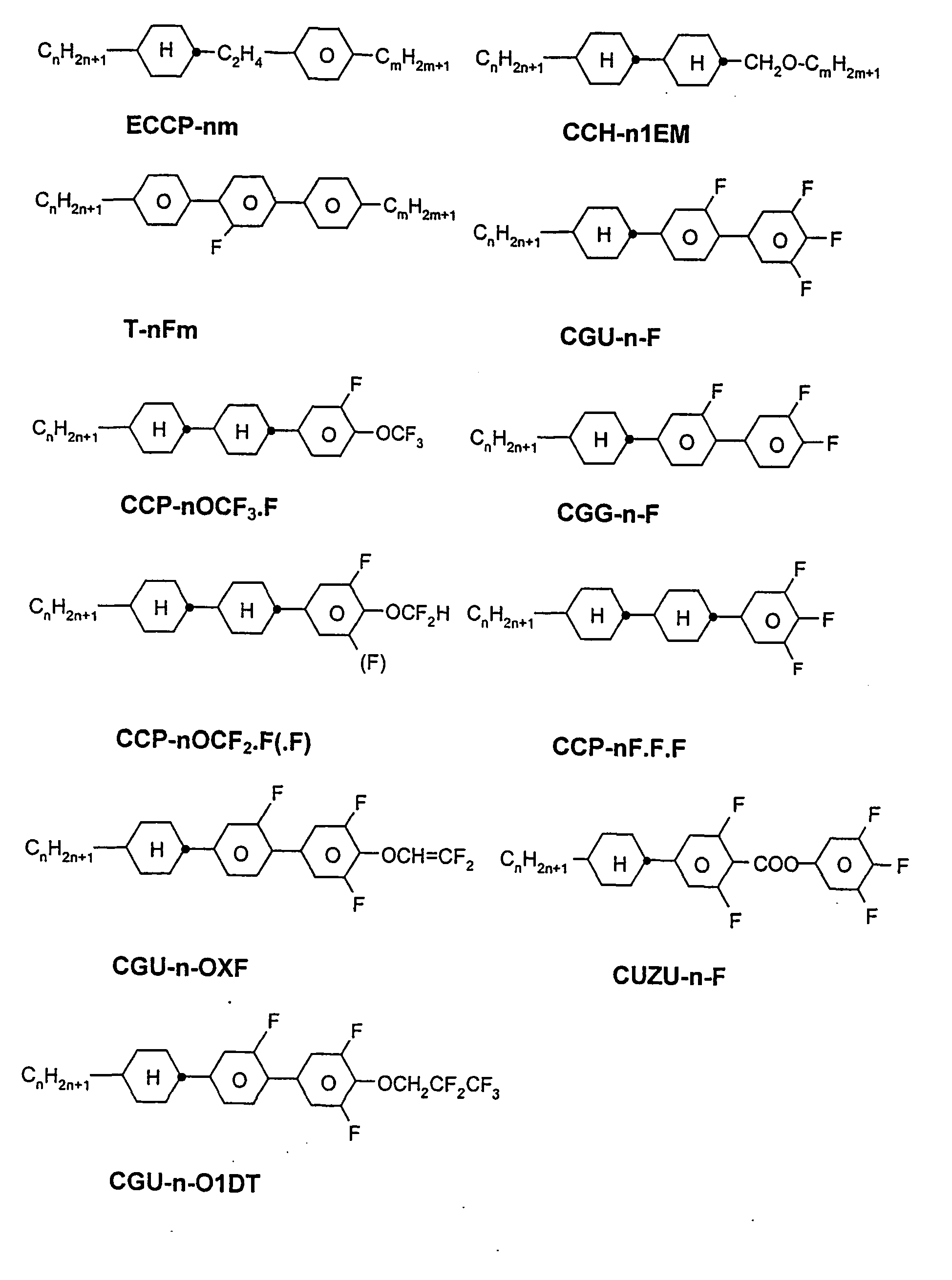

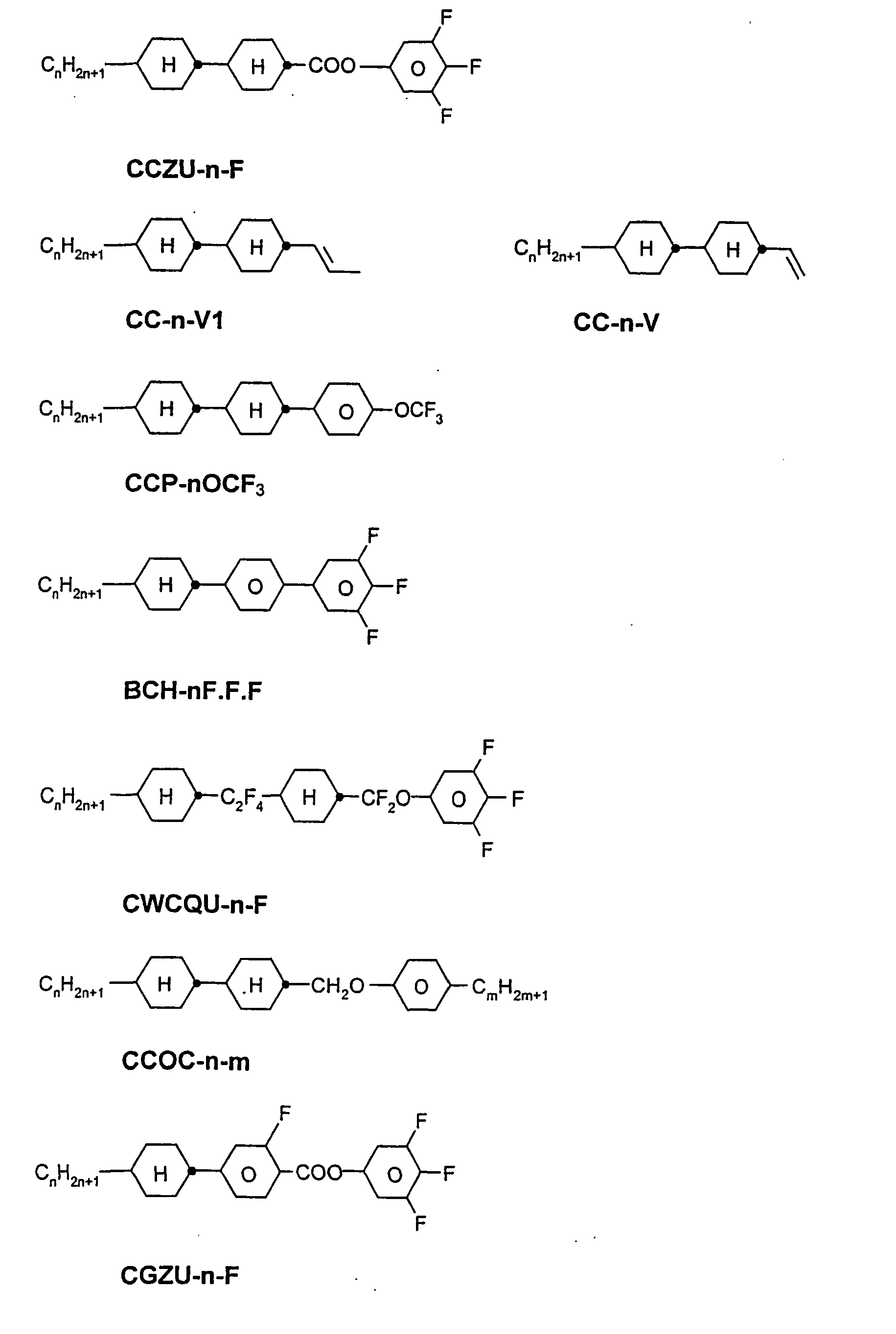

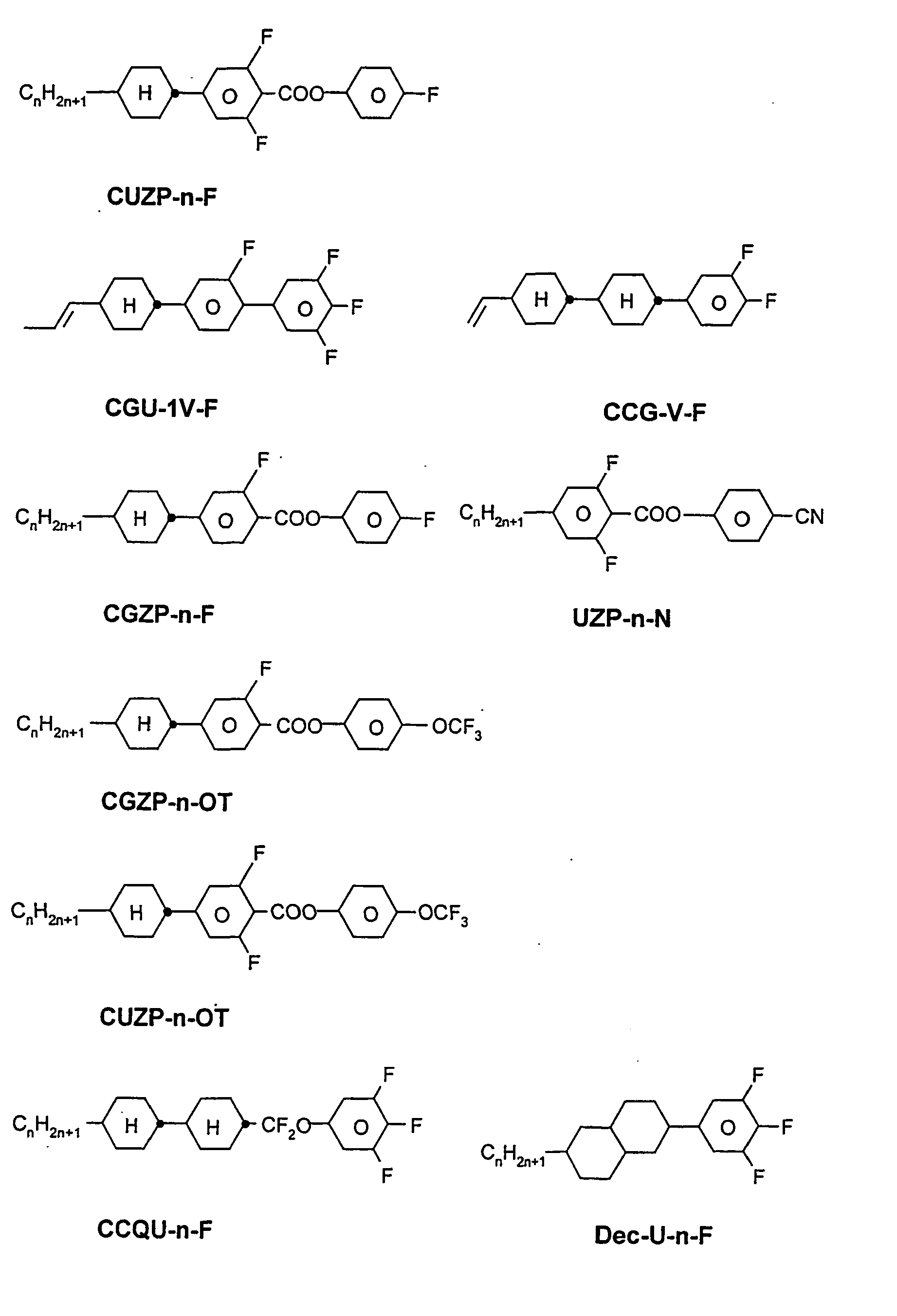

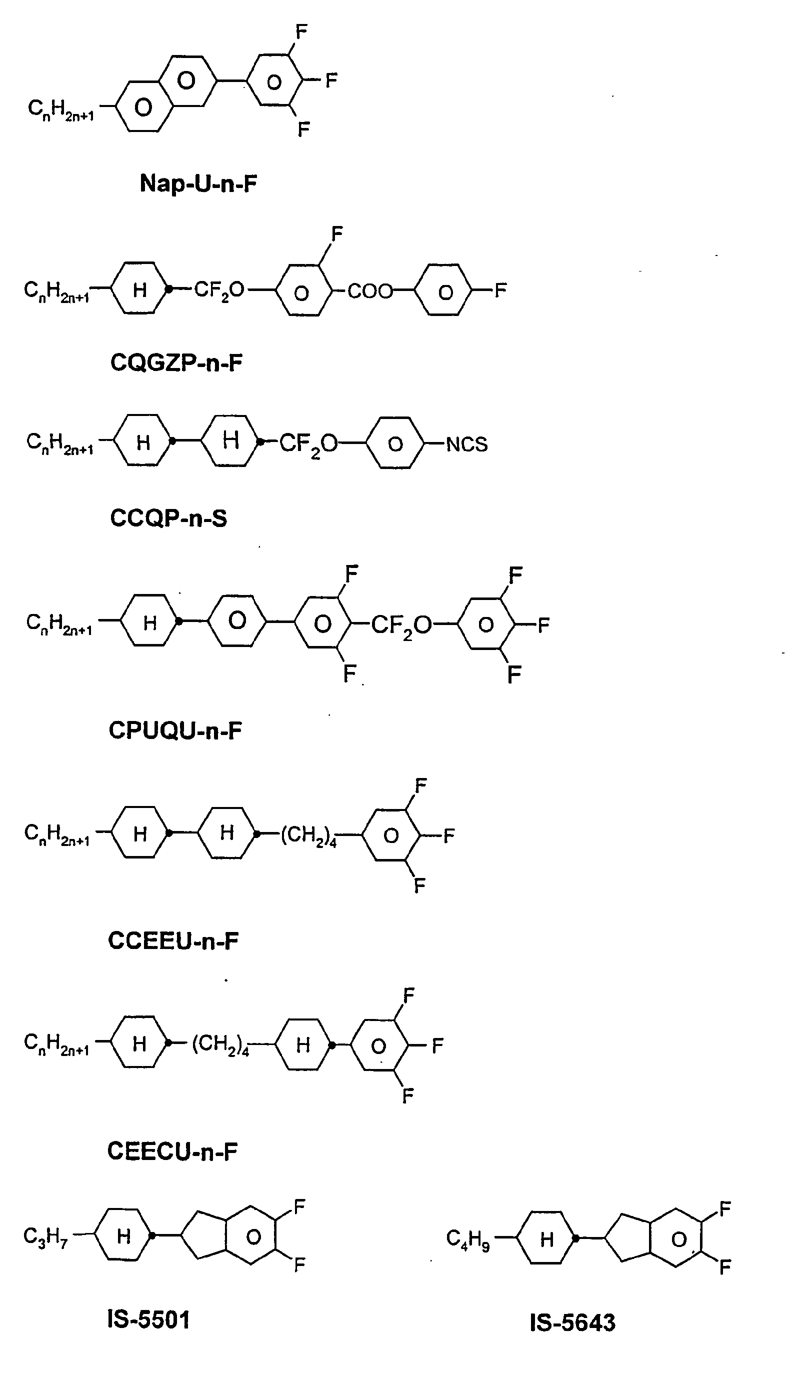

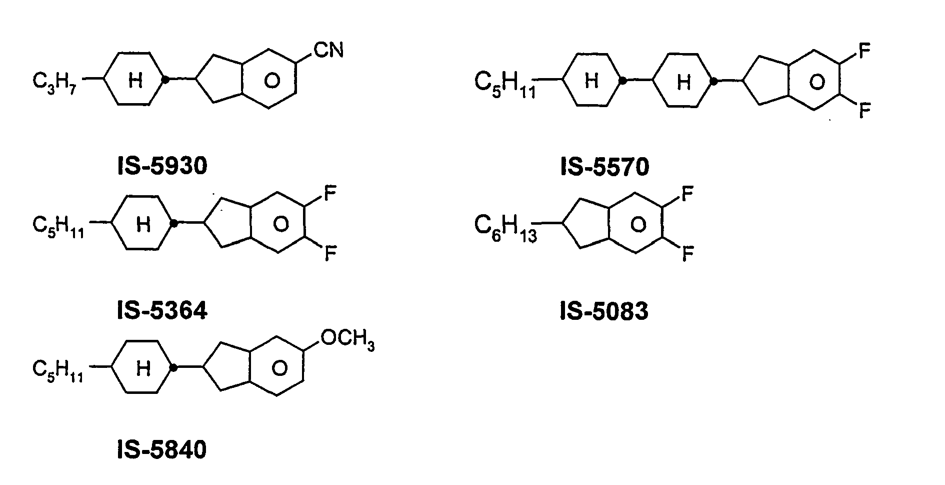

**Tabelle C :**

| |
|---|
| In der Tabelle C werden mögliche Dotierstoffe angegeben, die in der Regel den erfindungsgemäßen Mischungen zugesetzt werden . |
| 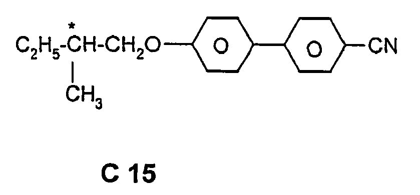 |
| 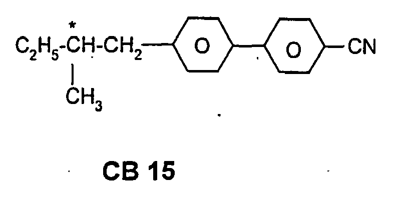 |
| 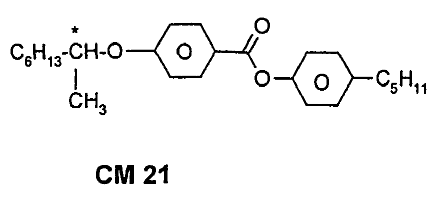 |
| 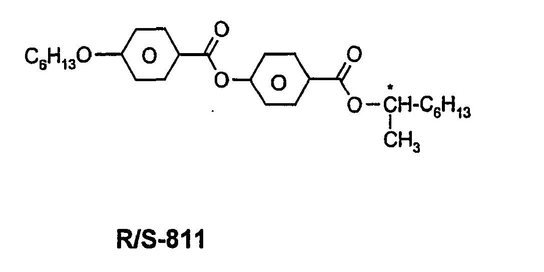 |
| 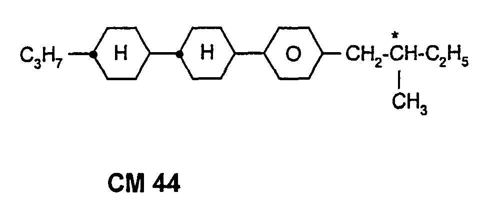 |
| 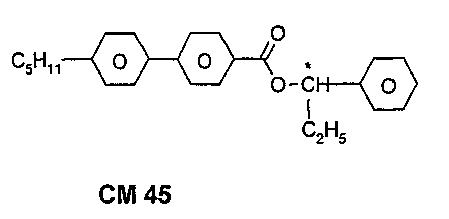 |
| 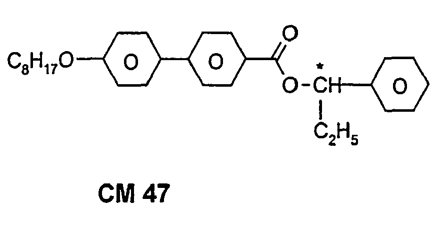 |
| 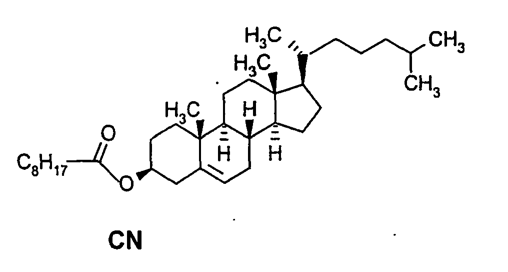 |
| 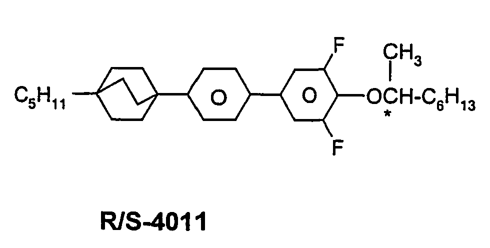 |
| 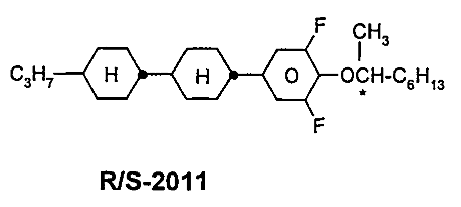 |

**Tabelle D**

| | |
|---|---|
| Stabilisatoren, die beispielsweise den erfindungsgemäßen Mischungen zugesetzt werden können, werden nachfolgend genannt. | |
| 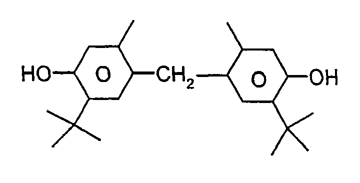 | 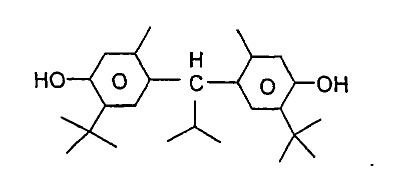 |
| 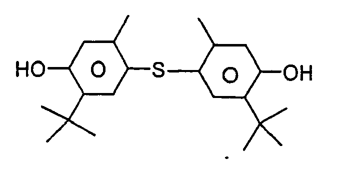 | 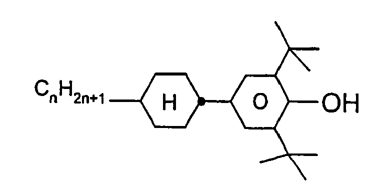 |
| 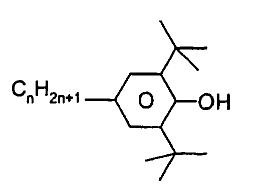 | 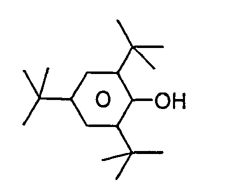 |
| 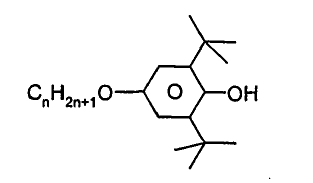 | 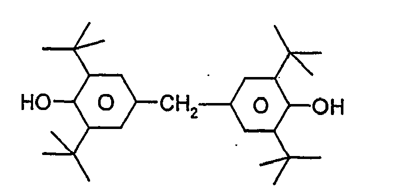 |
| 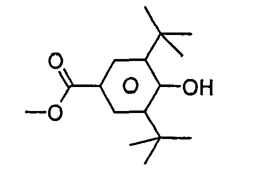 | 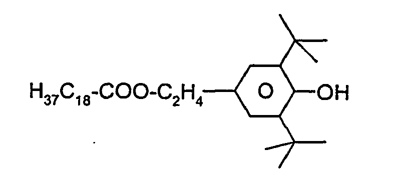 |
| 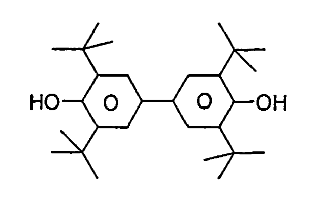 | 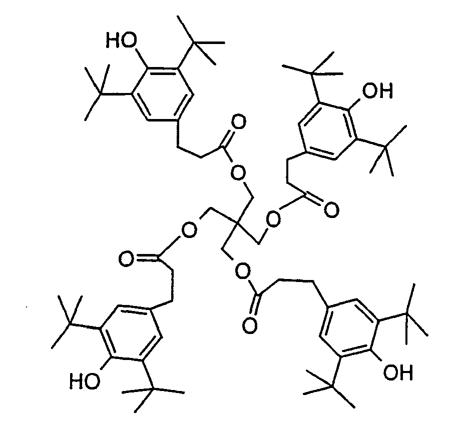 |
| 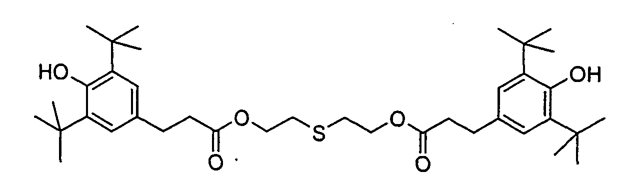 | |
| 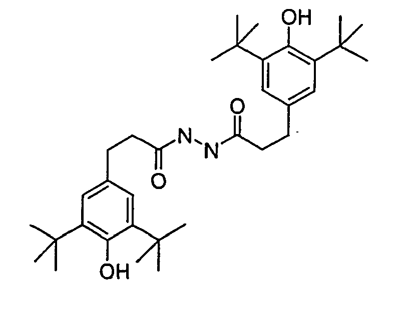 | 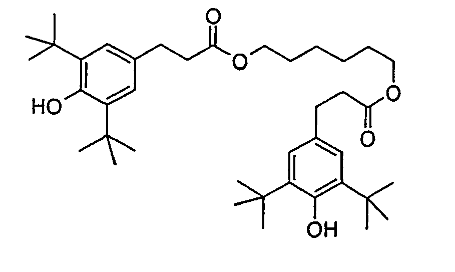 |
| 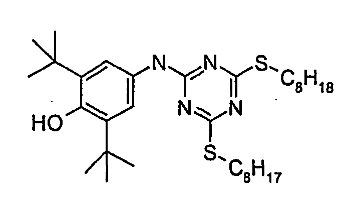 | 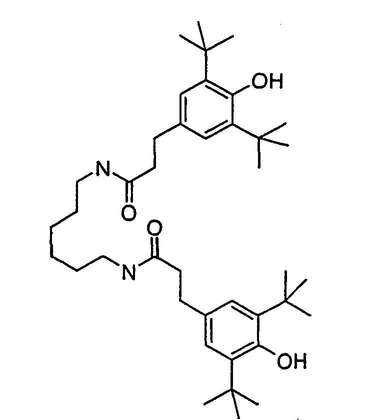 |
| 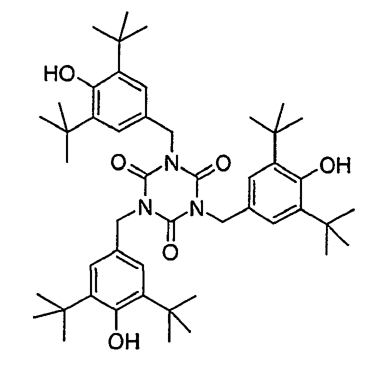 | 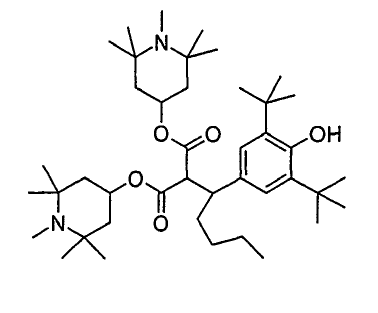 |
| 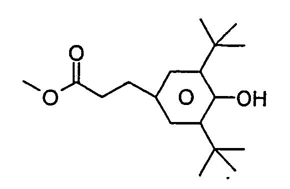 | 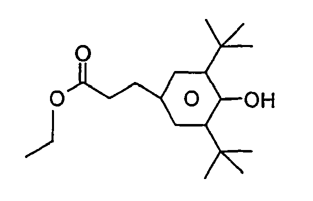 |
| 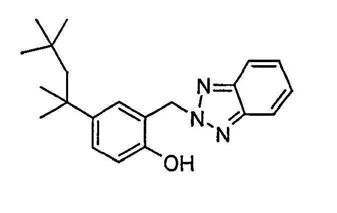 | 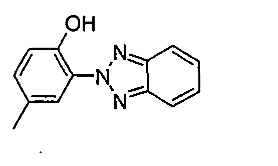 |
| 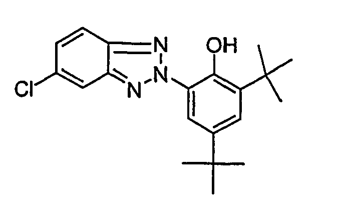 | 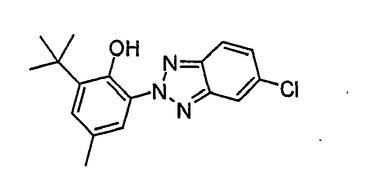 |
| 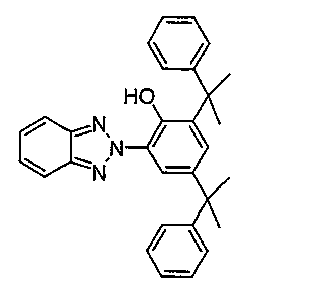 | 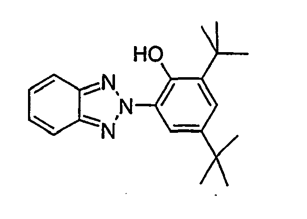 |
| 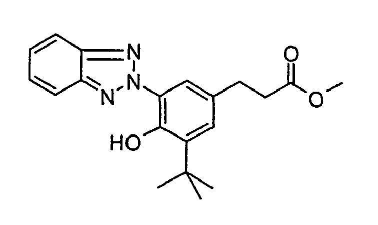 | 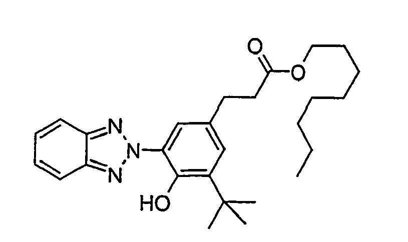 |
| 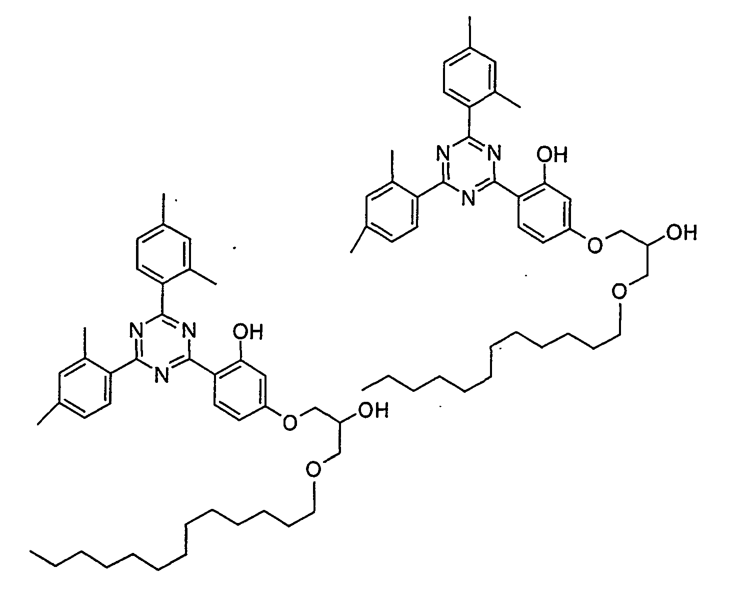 | |
| 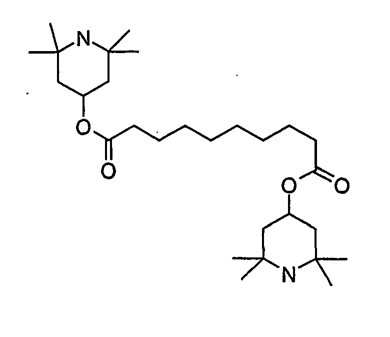 | 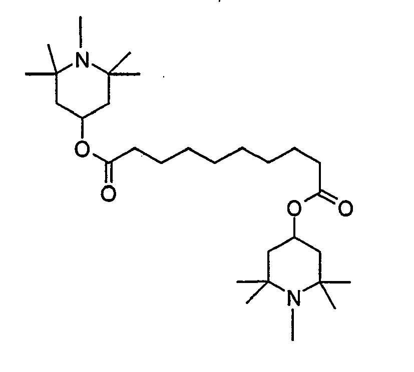 |

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C). Die Rotationsviskosität γ₁ (mPa · s) wurde bei 20 °C bestimmt.

### Beispiel 1

| Ein flüssigkristallines Medium enthaltend | | | |
|---|---|---|---|
| CCZU-2-F | 5.00 % | Klärpunkt [°C]: | 65.5 |
| CCZU-3-F | 14.00 % | S-N-Übergang [°C]: | < -40 |
| CCZU-5-F | 4.00% | Δn [589 nm, 20 °C]: | 0.0909 |
| BCH-3F.F.F | 7.00 % | γ₁ [mPa·s]: | 139 |
| CGU-2-F | 10.00 % | V_{(10,0,20)} [V]: | 1.15 |
| CGU-3-F | 10.00 % | | |
| CGU-5-F | 5.00 % | | |
| CCP-20CF₃ | 6.00 % | | |
| CCP-30CF₃ | 8.00 % | | |
| CCP-2F.F.F | 10.00 % | | |
| CCP-3F.F.F | 9.00 % | | |
| CC-1V-V1 | 4.00% | | |
| IS-5501 | 8.00 % | | |

### Beispiel 2

| Ein flüssigkristallines Medium enthaltend | | | |
|---|---|---|---|
| PCH-5F | 3.59 % | Klärpunkt [°C]: | 97.2 |
| CCP-20CF2.F.F | 19.12 % | Δε [1 kHz, 20 °C]: | +8.2 |
| CCP-30CF2.F.F | 17.95 % | V_{(10,0,20)} [V]: | 1.38 |
| CCP-50CF2.F.F | 19.12 % | | |
| CUP-2F.F | 6.01 % | | |
| CUP-3F.F | 6.01 % | | |
| CBC-33F | 6.01 % | | |
| CBC-53F | 6.01 % | | |
| CBC-55F | 5.92 % | | |
| IS-5501 | 10.24 % | | |

### Beispiel 3

| Ein flüssigkristallines Medium enthaltend | | | |
|---|---|---|---|
| CCZU-2-F | 5.00% | Klärpunkt [°C]: | 70.2 |
| CCZU-3-F | 15.00 % | | |
| CCZU-4-F | 5.00 % | | |
| CGU-2-F | 10.00 % | | |
| CGU-3-F | 10.00 % | | |
| CGU-5-F | 6.00 % | | |
| BCH-3F.F.F | 5.00 % | | |
| CCP-2F.F.F | 10.00 % | | |
| CCP-20CF₃ | 9.00 % | | |
| CCZG-2-OT | 10.00 % | | |
| CCZG-3-OT | 5.00 % | | |
| CC-3-V1 | 4.00 % | | |
| IS-5501 | 6.00% | | |

### Beispiel 4

| Ein flüssigkristallines Medium enthaltend | | | |
|---|---|---|---|
| PCH-7F | 6.00 % | Klärpunkt [°C]: | 93.0 |
| CCP-20CF₃ | 11.00 % | Δn [589 nm, 20 °C]: | 0.0943 |
| CCP-30CF₃ | 12.00 % | V_{(10,0,20)} [V]: | 1.55 |
| CCP-40CF₃ | 10.00 % | | |
| CCP-50CF₃ | 12.00 % | | |
| BCH-3F.F.F | 12.00 % | | |
| BCH-5F.F.F | 11.00 % | | |
| CCP-3F.F.F | 12.00 % | | |
| CCP-5F.F.F | 9.00 % | | |
| IS-5501 | 5.00% | | |

### Beispiel 5

| Ein flüssigkristallines Medium enthaltend | | | |
|---|---|---|---|
| CCP-20CF₃ | 11.00 % | Klärpunkt [°C]: | 98.0 |
| CCP-30CF₃ | 12.00 % | Δn [589 nm, 20 °C]: | 0.0983 |
| CCP-40CF₃ | 10.00 % | V_{(10,0,20)} [V]: | 1.50 |
| CCP-50CF₃ | 12.00 % | | |
| BCH-3F.F.F | 12.00 % | | |
| BCH-5F.F.F | 11.00 % | | |
| CCP-3F.F.F | 12.00 % | | |
| CCP-5F.F.F | 9.00% | | |
| IS-5501 | 11.00 % | | |

### Beispiel 6

| Ein flüssigkristallines Medium enthaltend | | | |
|---|---|---|---|
| CCP-20CF₃ | 11.00 % | Klärpunkt [°C]: | 71.4 |
| CCP-30CF₃ | 12.00 % | | |
| CCP-40CF₃ | 10.00 % | | |
| CCP-50CF₃ | 12.00 % | | |
| BCH-3F.F.F | 12.00 % | | |
| BCH-5F.F.F | 11.00 % | | |
| CCP-3F.F.F | 12.00 % | | |
| CCP-5F.F.F | 9.00 % | | |
| IS-5501 | 5.00% | | |
| IS-5364 | 6.00 % | | |

### Beispiel 7

| Ein flüssigkristallines Medium enthaltend | | | |
|---|---|---|---|
| PCH-5F | 5.00% | Klärpunkt [°C]: | 90.8 |
| CCP-20CF₃ | 11.00 % | | |
| CCP-30CF₃ | 12.00 % | | |
| CCP-40CF₃ | 10.00 % | | |
| CCP-50CF₃ | 12.00 % | | |
| BCH-3F.F.F | 12.00 % | | |
| BCH-5F.F.F | 11.00 % | | |
| CCP-3F.F.F | 12.00 % | | |
| CCP-5F.F.F | 9.00% | | |
| IS-5364 | 6.00% | | |

### Beispiel 8

| | | | |
|---|---|---|---|
| CC-3-V1 | 10.00 % | Klärpunkt [°C]: | +80.0 |
| CC-5-V | 10.00 % | Δn [589 nm, 20 °C]: | +0.1033 |
| CCH-35 | 5.00 % | d · Δn [µm, 20 °C]: | 0.50 |
| IS-5501 | 8.00 % | Verdrillung [°]: | 90 |
| IS-5643 | 4.00% | V_{10,0,20} [V]: | 1.37 |
| CCP-20CF₃ | 8.00 % | | |
| CCP-30CF₃ | 3.00% | | |
| CCP-2F.F.F | 3.00% | | |
| PGU-2-F | 8.00% | | |
| PGU-3-F | 8.00% | | |
| CGZP-2-OT | 11.00 % | | |
| CGZP-3-OT | 9.00% | | |
| CCZU-2-F | 4.00% | | |
| CCZU-3-F | 9.00% | | |

### Beispiel 9

| | | | |
|---|---|---|---|
| CCH-35 | 4.00 % | S → N [°C]: | < -40.0 |
| IS-5501 | 9.00 % | Klärpunkt [°C]: | +78.5 |
| CCP-2F.F.F | 10.00 % | Δn [589 nm, 20 °C]: | +0.1033 |
| CCP-3F.F.F | 11.00 % | d . Δn [µm, 20 °C]: | 0.50 |
| CCP-20CF₃.F | 9.00 % | Verdrillung [°]: | 90 |
| CCP-20CF₃ | 8.00 % | | |
| CCP-30CF₃ | 8.00 % | | |
| CCP-40CF₃ | 7.00 % | | |
| CCP-50CF₃ | 4.00% | | |
| CGU-2-F | 10.00 % | | |
| CGU-3-F | 11.00 % | | |
| CGU-5-F | 4.00 % | | |
| CCGU-3-F | 5.00 % | | |

### Beispiel 10

| | | | |
|---|---|---|---|
| CCZU-2-F | 3.00 % | Klärpunkt [°C]: | +70.5 |
| CCZU-3-F | 13.00 % | Δn: | +0.0772 |
| CCP-20CF₃ | 4.00% | γ₁ [20 °C, mPa·s]: | 54 |
| CCP-30CF₃ | 8.00 % | d . Δn [20 °C, µm]: | 0.50 |
| CGZP-2-OT | 7.00 % | Verdrillung [°]: | 90 |
| CGZP-3-OT | 6.00 % | V₁₀ [V]: | 1.73 |
| PGU-2-F | 5.00 % | | |
| IS-5083 | 7.00 % | | |
| CC-5-V | 10.00 % | | |
| CC-3-V1 | 12.00 % | | |
| CCH-35 | 5.00 % | | |
| CC-3-V | 18.00 % | | |
| BCH-32 | 2.00 % | | |

### Beispiel 11

| | | | |
|---|---|---|---|
| CCZU-2-F | 3.00 % | Klärpunkt [°C]: | +74.5 |
| CCZU-3-F | 13.00 % | Δn: | +0.0776 |
| CCP-20CF₃ | 7.00 % | γ₁ [20 °C, mPa·s]: | 57 |
| CCP-30CF₃ | 6.00 % | d · Δn [20 °C, µm]: | 0.50 |
| CGZP-2-OT | 8.00% | Verdrillung [°]: | 90 |
| CGZP-3-OT | 7.00% | V₁₀ [V]: | 1.81 |
| PGU-2-F | 3.00% | | |
| IS-5083 | 6.00% | | |
| CC-5-V | 7.00% | | |
| CC-3-V1 | 13.00 % | | |
| CCH-35 | 5.00% | | |
| CC-3-V | 19.00 % | | |
| BCH-32 | 3.00 % | | |

### Beispiel 12

| | |
|---|---|
| CCZU-2-F | 3.00 % |
| CCZU-3-F | 13.00 % |
| CCP-20CF₃ | 7.00% |
| CGZP-2-OT | 7.00 % |
| CGZP-3-OT | 6.00 % |
| PGU-2-F | 4.00% |
| IS-5083 | 6.00 % |
| CC-5-V | 10.00 % |
| CC-3-V1 | 11.00 % |
| CCH-35 | 5.00 % |
| CC-3-V | 18.00 % |
| CBC-33 | 3.00% |

### Beispiel 13

| | |
|---|---|
| IS-5570 | 20.00 % |
| PCH-5F | 3.20% |
| CCP-30CF₂.F.F | 16.00 % |
| CCP-50CF₂.F.F | 17.04 % |
| CUP-2F.F | 5.36% |
| CUP-3F.F | 5.36 % |
| CBC-33F | 5.36 % |
| CBC-53F | 5.36 % |
| CBC-55F | 5.28 % |
| CCP-20CF₂.F.F | 17.04 % |

## Patentansprüche

1. Flüssigkristallines Medium auf der Basis eines Gemisches von polaren Verbindungen mit positiver dielektrischer Anisotropie, **dadurch gekennzeichnet, dass** es eine oder mehrere Verbindungen der Formel I 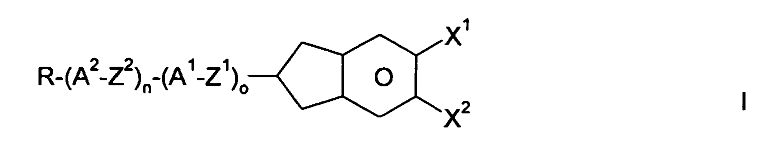 worin
R F, Cl, Br, I, CN, NCS, SF₅ oder einen unsubstituierten, einfach durch CN oder CF₃ oder ein- oder mehrfach durch Halogen substituierten Alkylrest mit 1 bis 12 C-Atomen, wobei auch ein oder zwei nicht benachbarte CH₂-Gruppen durch -O-, -CH=CH-, -CF=CF-, -C≡C-, -CO-, -OCO- oder -COO- so ersetzt sein können, dass O-Atome nicht direkt miteinander verknüpft sind,
A¹ und A² jeweils unabhängig voneinander 1,4-Phenylen, worin auch eine oder zwei CH-Gruppen durch N ersetzt sein können, und welches auch durch L ein- oder mehrfach substituiert sein kann, trans-1,4-Cyclohexylen, worin auch eine oder mehrere nicht benachbarte CH₂-Gruppen durch -O- und/oder -S- ersetzt sein können, 1,4-Cyclohexenylen, 1,4-Bicyclo-(2,2,2)-octylen, Piperidin-1,4-diyl, Naphthalin-2,6-diyl, Decahydronaphthalin-2,6-diyl oder 1,2,3,4-Tetrahydronaphthalin-2,6-diyl,
L F, Cl, Br, I, CN, NCS, SF₅ oder Alkyl, Alkoxy, Alkylcarbonyl, Alkylcarbonyloxy, Alkoxycarbonyl, Alkenyl oder Oxaalkenyl mit 1 bis 3 C-Atomen, worin auch ein oder mehrere H-Atome durch F oder Cl ersetzt sein können,
Z¹ und Z² jeweils unabhängig voneinander -CH₂O-, -OCH₂-, -CF₂O-, -OCF₂-, -COO-, -OCO-, -CF₂CF₂-, -CH₂CH₂-, -(CH₂)₄-, -(CH₂)₃O-, -O(CH₂)₃-, -CF₂CH₂-, -CH=CH-, -CH=CF-, -CF=CF-, -C≡C- oder eine Einfachbindung,
X¹ und X² jeweils unabhängig voneinander F, Cl, Br, I, CN, NCS, SF₅ oder Alkyl, Alkoxy, Alkylcarbonyl, Alkylcarbonyloxy, Alkoxycarbonyl, Alkenyl oder Oxaalkenyl mit bis zu 5 C-Atomen, worin auch ein oder mehrere H-Atome durch F oder Cl ersetzt sein können, einer der Reste X¹ und X² auch H oder R, und
n und o jeweils unabhängig voneinander 0, 1 oder 2, wobei n + o ≤ 3 ist,
bedeuten,
und
eine oder mehrere Verbindungen ausgewählt aus der Gruppe bestehend aus den allgemeinen Formeln II, III, IV, V, VI und VII, 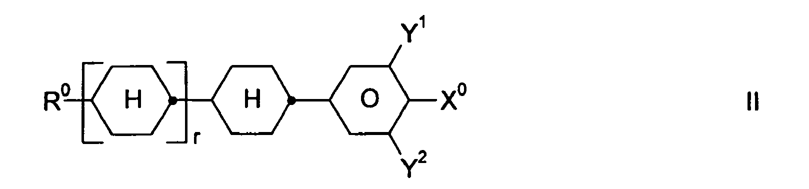 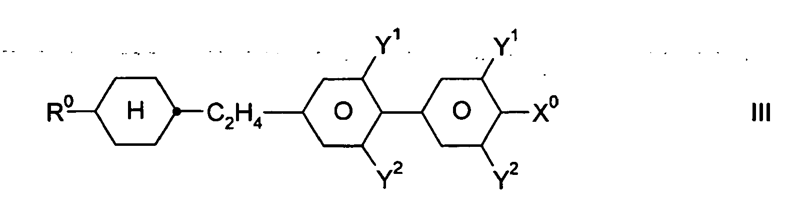 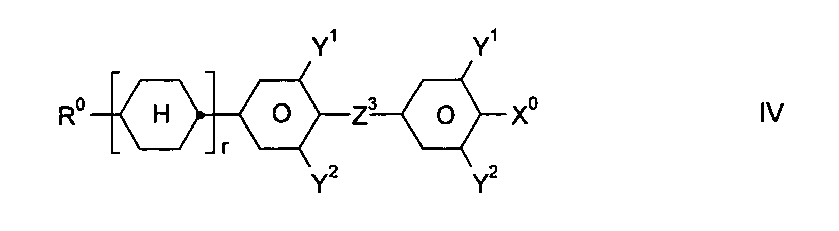 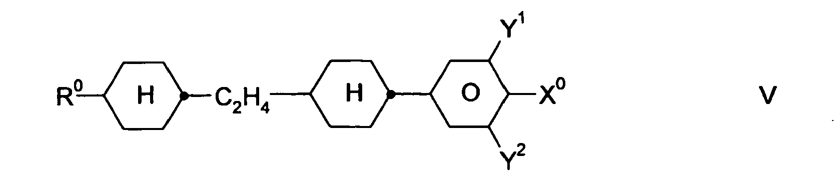 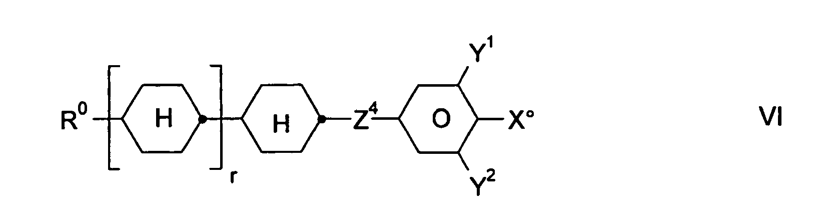 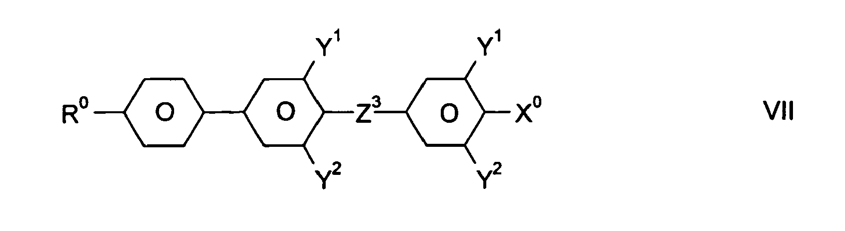 worin
R⁰ n-Alkyl, Alkoxy, Fluoralkyl, Alkenyl oder Oxaalkenyl mit jeweils bis zu 9 C-Atomen,
Z³ -COO-, -CF₂O-, -C₂F₄- oder eine Einfachbindung,
Z⁴ -COO-, -CF₂O-, -C₂F₄- oder -C₂H₄-,
X⁰ F, Cl, halogeniertes Alkyl, Alkenyl oder Alkoxy mit 1 bis 6 C-Atomen,
Y¹ und Y² jeweils F,
r 0 oder 1.
bedeuten,
enthält.

2. Flüssigkristallines Medium nach Anspruch 1, **dadurch gekennzeichnet, dass** es eine oder mehrere Verbindungen der Formeln la bis le 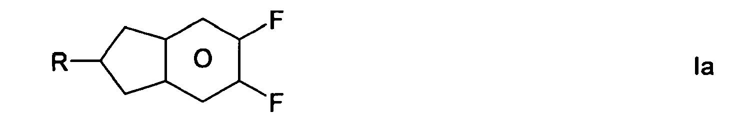 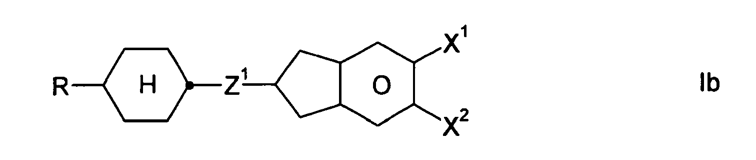 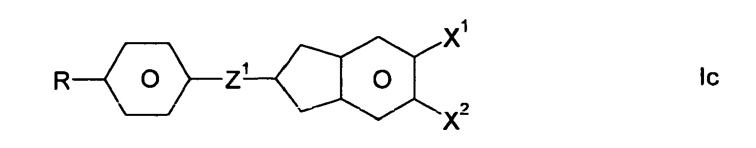 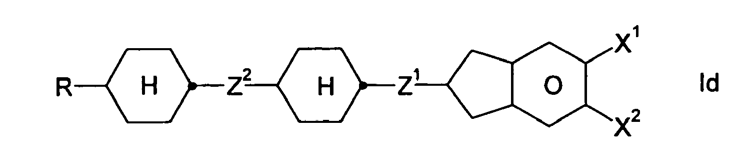 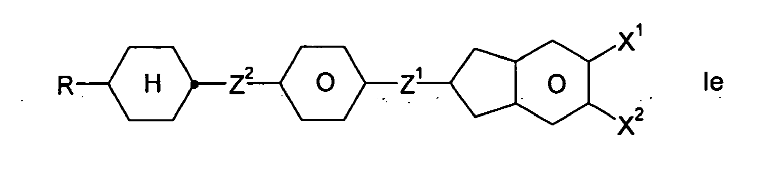 worin
R, Z¹, X¹ und X² die in Anspruch 1 angegebenen Bedeutungen haben, enthält.

3. Flüssigkristallines Medium nach Anspruch 1 oder 2, **dadurch gekennzeichnet, dass** in der Formel I n + o 0 oder 1 bedeuten.

4. Flüssigkristallines Medium nach einem oder mehreren der Ansprüche 1 bis 3, **dadurch gekennzeichnet, dass** in der Formel I X¹ und/oder X² F, Cl, CN, fluoriertes Alkyl oder fluoriertes Alkoxy mit jeweils 1 bis 3 C-Atomen bedeuten.

5. Flüssigkristallines Medium nach einem oder mehreren der Ansprüche 1 bis 4, **dadurch gekennzeichnet, dass** es zusätzlich eine oder mehrere Verbindungen ausgewählt aus der Gruppe bestehend aus den allgemeinen Formeln VIII bis XIV, 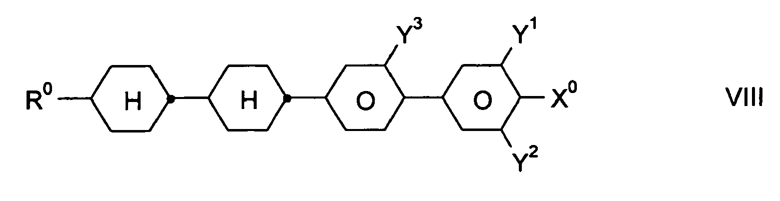 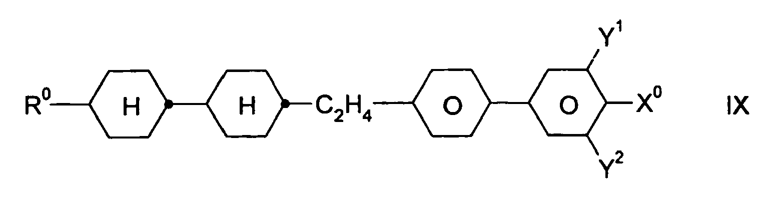 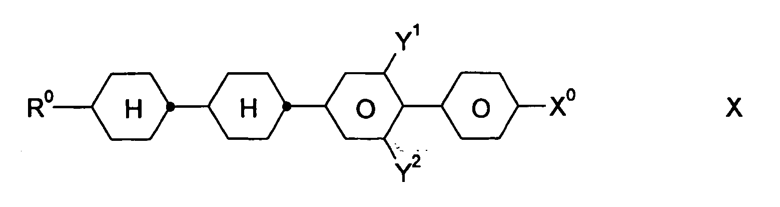 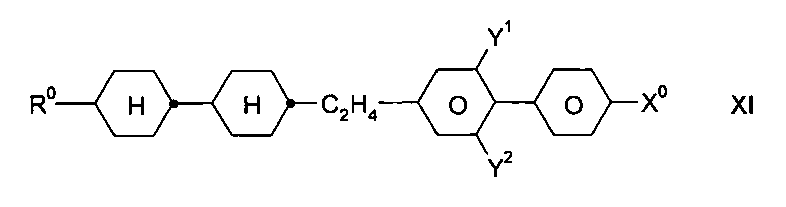 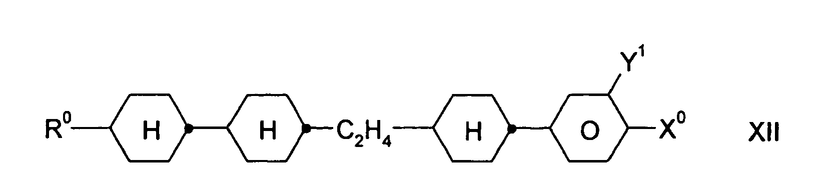 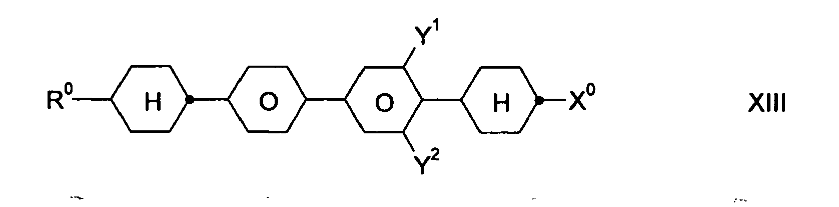 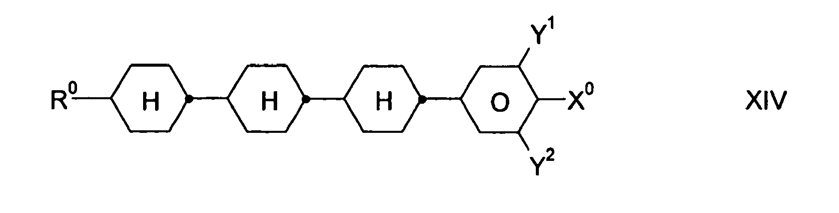 worin
R⁰ undX⁰ die in Anspruch 1 angegebenen Bedeutungen haben und
Y¹, Y² und Y³ jeweils unabhängig voneinander H oder F bedeuten,
enthält.

6. Flüssigkristallines Medium nach einem oder mehreren der Ansprüche 1 bis 5, **dadurch gekennzeichnet, dass** es zusätzlich eine oder mehrere Verbindungen ausgewählt aus der Gruppe bestehend aus den allgemeinen Formeln XXI bis XXVII, 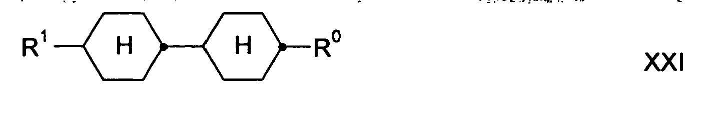 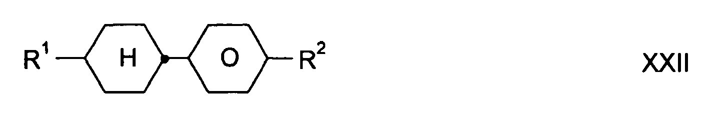 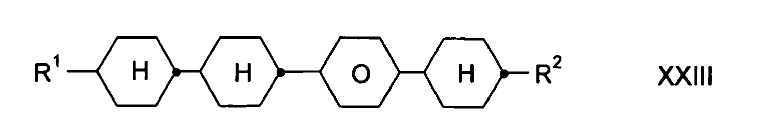 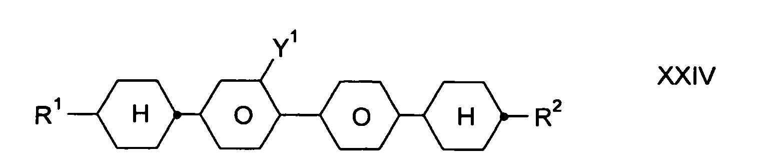 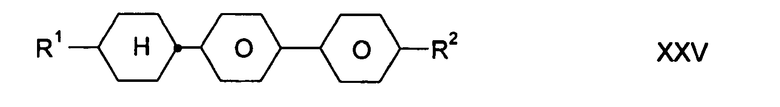 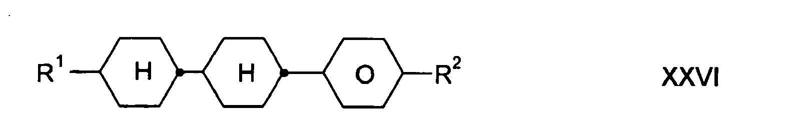 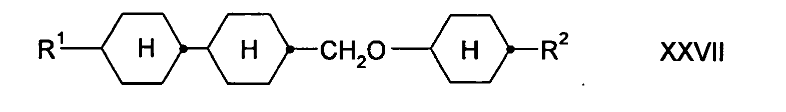 worin R⁰ und Y¹ die in Anspruch 5 angegebene Bedeutung haben und R¹ und R² jeweils unabhängig voneinander Alkyl oder Alkoxy mit 1 bis 8 C-Atomen oder Alkenyl mit 2 bis 7 C-Atomen bedeuten, enthält

7. Flüssigkristalines Medium nach einem oder mehreren der Ansprüche 1 bis 6, **dadurch gekennzeichnet, dass** der Anteil an Verbindungen der Formel I im Gesamtgemisch 2 bis 55 Gew.-% beträgt.

8. Flüssigkristallines Medium nach einem oder mehreren der Ansprüche 1 bis 7, **dadurch gekennzeichnet, dass** der Anteil an Verbindungen der Formeln I bis VII, und im Gesamtgemisch mindestens 50 Gew.-% beträgt.

9. Verwendung des flüssigkristallinen Mediums nach einem oder mehreren der Ansprüche 1 bis 8 für elektrooptische Zwecke.

10. Elektrooptische Flüssigkristallanzeige enthaltend ein flüssigkristallines Medium nach einem oder mehreren der Ansprüche 1 bis 8.

## Claims

1. Liquid-crystalline medium based on a mixture of polar compounds of positive dielectric anisotropy, **characterised in that** it comprises one or more compounds of the formula I 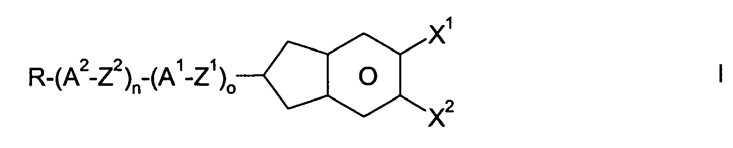 in which
R denotes F, Cl, Br, I, CN, NCS, SF₅ or an alkyl radical having 1 to 12 C atoms which is unsubstituted, monosubstituted by CN or CF₃ or mono- or polysubstituted by halogen and in which one or two non-adjacent CH₂ groups may be replaced by -O-, -CH=CH-, -CF=CF-, -C≡C-, -CO-, -OCO- or -COO- in such a way that O atoms are not linked directly to one another,
A¹ and A² each, independently of one another, denote 1,4-phenylene, in which, in addition, one or two CH groups may be replaced by N and which may also be mono- or polysubstituted by L, or trans-1,4-cyclohexylene, in which, in addition, one or more non-adjacent CH₂ groups may be replaced by -O- and/or -S-, or 1,4-cyclohexenylene, 1,4-bicyclo[2.2.2]octylene, piperidine-1,4-diyl, naphthalene-2,6-diyl, decahydronaphthalene-2,6-diyl or 1,2,3,4-tetrahydronaphthalene-2,6-diyl,
L denotes F, Cl, Br, I, CN, NCS, SF₅ or alkyl, alkoxy, alkylcarbonyl, alkylcarbonyloxy, alkoxycarbonyl, alkenyl or oxaalkenyl having 1 to 3 C atoms, in which, in addition, one or more H atoms may be replaced by F or Cl,
Z¹ and Z² each, independently of one another, denote -CH₂O-, -OCH₂-, -CF₂O-, -OCF₂-, -COO-, -OCO-, -CF₂CF₂-, -CH2CH2-, -(CH₂)₄-, -(CH₂)₃O-, -O(CH₂)₃-, -CF₂CH₂-, -CH=CH-, -CH=CF-, -CF=CF-, -C≡C- or a single bond,
X¹ and X² each, independently of one another, denote F, Cl, Br, I, CN, NCS, SF₅ or alkyl, alkoxy, alkylcarbonyl, alkylcarbonyloxy, alkoxycarbonyl, alkenyl or oxaalkenyl having up to 5 C atoms, in which, in addition, one or more H atoms may be replaced by F or Cl, one of the radicals X¹ and X² also denotes H or R, and
n and o each, independently of one another, denote 0, 1 or 2, where n + o is ≤ 3,
and
one or more compounds selected from the group consisting of the general formulae II, III, IV, V, VI and VII: 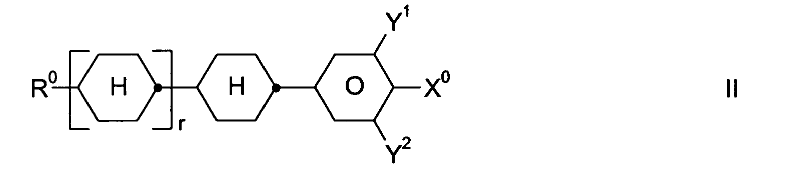 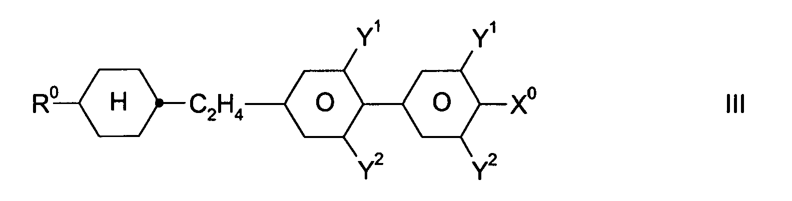 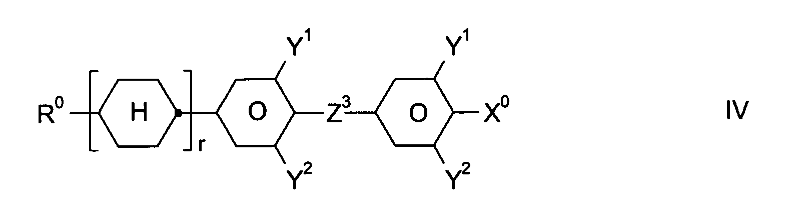 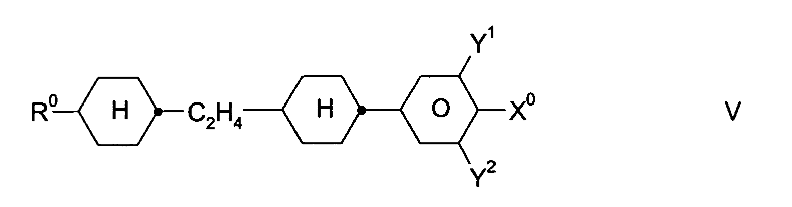 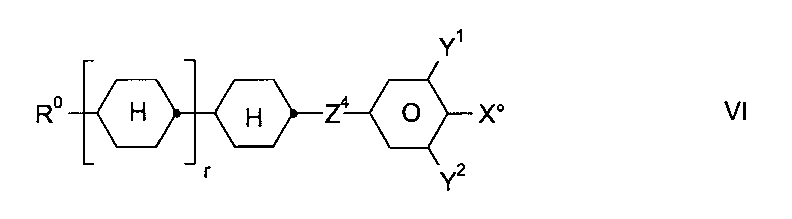 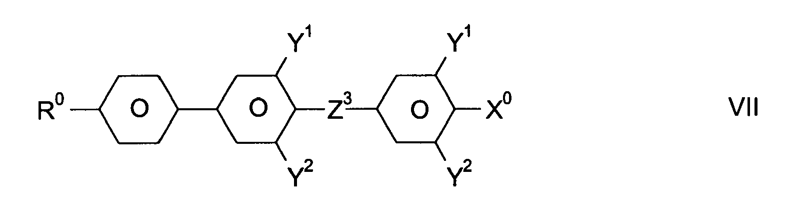 in which
R⁰ denotes n-alkyl, alkoxy, fluoroalkyl, alkenyl or oxaalkenyl, each having up to 9 C atoms,
Z³ denotes -COO-, -CF₂O-, -C₂F₄- or a single bond,
Z⁴ denotes -COO-, -CF₂O-, -C₂F₄- or -C₂H₄-,
X⁰ denotes F, Cl, halogenated alkyl, alkenyl or alkoxy having 1 to 6 C atoms,
Y¹ and Y² each denote F,
r denotes 0 or 1.

2. Liquid-crystalline medium according to Claim 1, **characterised in that** it comprises one or more compounds of the formulae la to le: 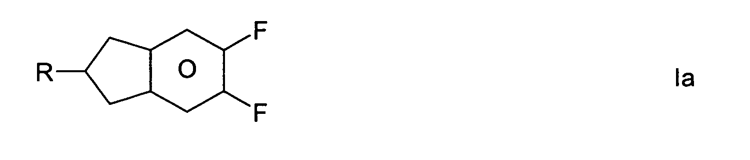 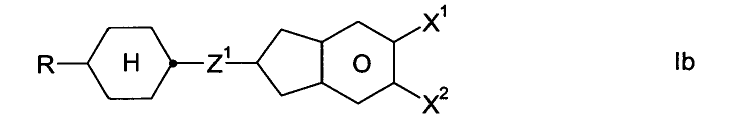 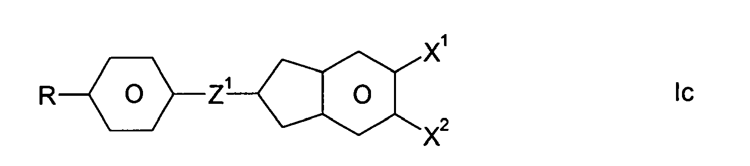 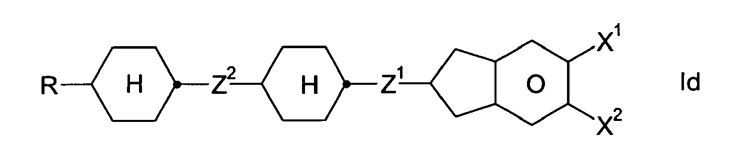 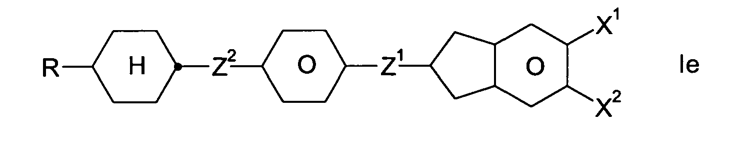 in which
R, Z¹, X¹ and X² have the meanings indicated in Claim 1.

3. Liquid-crystalline medium according to Claim 1 or 2, **characterised in that,** in the formula I, n + o denotes 0 or 1.

4. Liquid-crystalline medium according to one or more of Claims 1 to 3, **characterised in that,** in the formula I, X¹ and/or X² denote F, Cl, CN, fluorinated alkyl or fluorinated alkoxy, each having 1 to 3 C atoms.

5. Liquid-crystalline medium according to one or more of Claims 1 to 4, **characterised in that** it additionally comprises one or more compounds selected from the group consisting of the general formulae VIII to XIV: 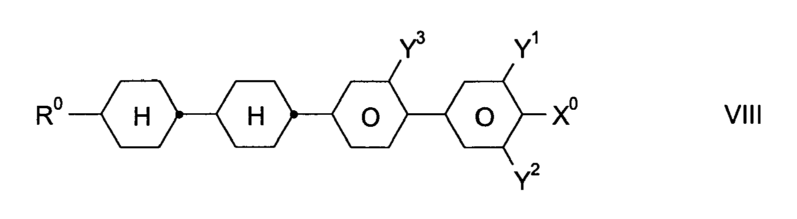 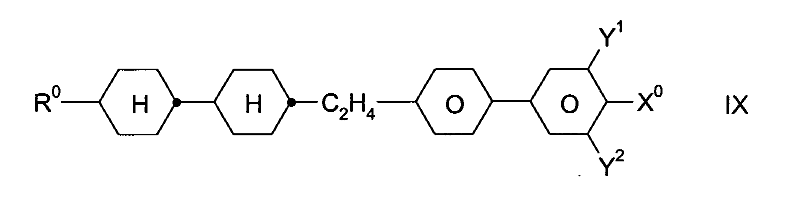 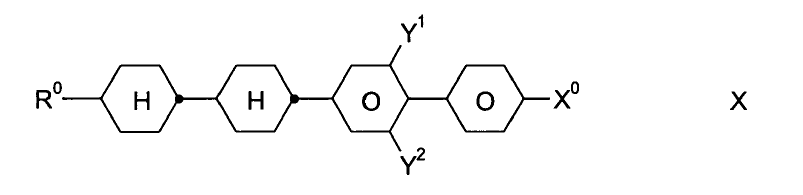 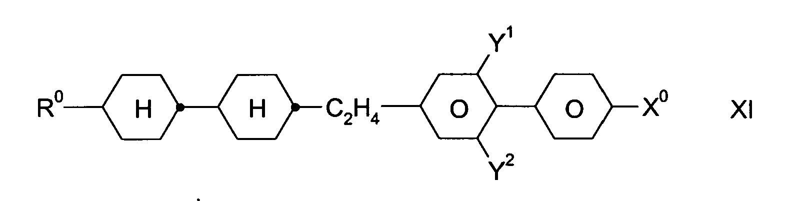 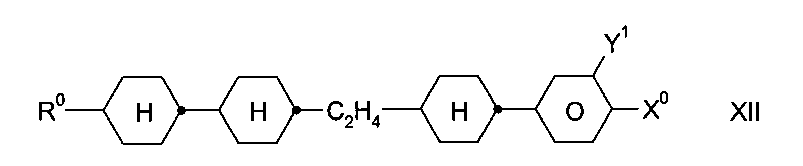 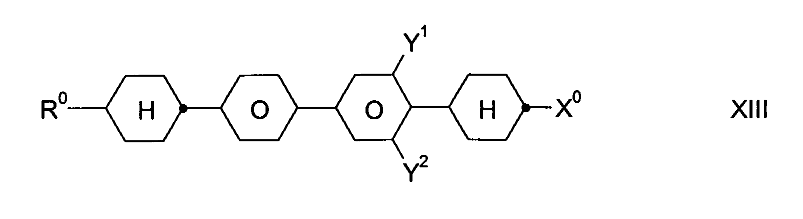 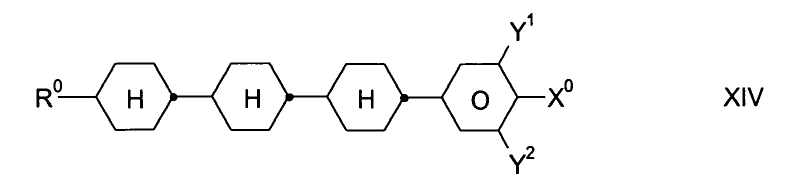 in which
R⁰ and X⁰ have the meanings indicated in Claim 1, and
Y¹, Y² and Y³ each, independently of one another, denote H or F.

6. Liquid-crystalline medium according to one or more of Claims 1 to 5, **characterised in that** it additionally comprises one or more compounds selected from the group consisting of the general formulae XXI to XXVII: 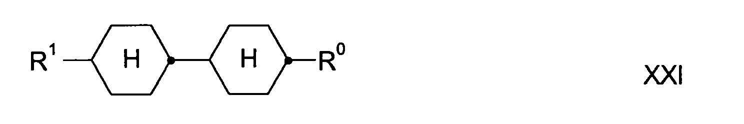 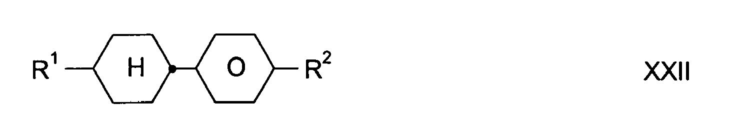 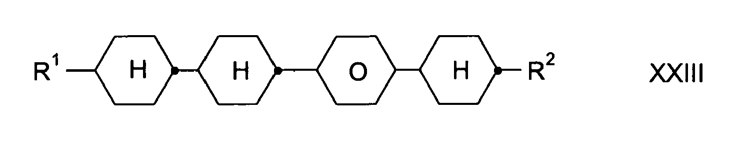 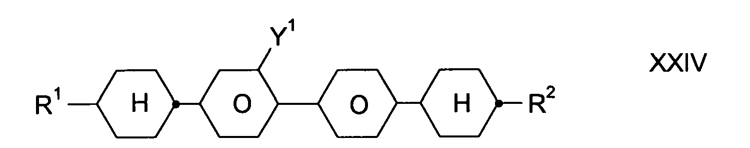 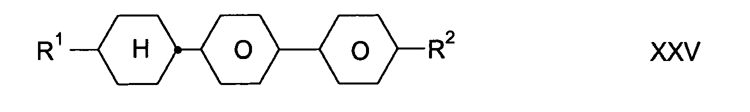 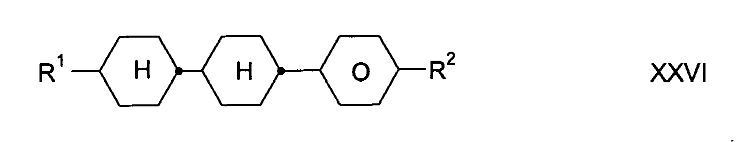 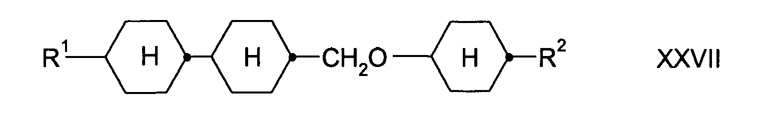 in which R⁰ and Y¹ have the meaning indicated in Claim 5, and R¹ and R² each, independently of one another, denote alkyl or alkoxy having 1 to 8 C atoms or alkenyl having 2 to 7 C atoms.

7. Liquid-crystalline medium according to one or more of Claims 1 to 6, **characterised in that** the proportion of compounds of the formula I in the mixture as a whole is 2 to 55% by weight.

8. Liquid-crystalline medium according to one or more of Claims 1 to 7, **characterised in that** the proportion of compounds of the formulae I to VII in the mixture as a whole is at least 50% by weight.

9. Use of the liquid-crystalline medium according to one or more of Claims 1 to 8 for electro-optical purposes.

10. Electro-optical liquid-crystal display containing a liquid-crystalline medium according to one or more of Claims 1 to 8.

## Revendications

1. Milieu cristallin liquide basé sur un mélange de composés polaires d'anisotropie diélectrique positive, **caractérisé en ce qu'**il comprend un ou plusieurs composés de la formule I 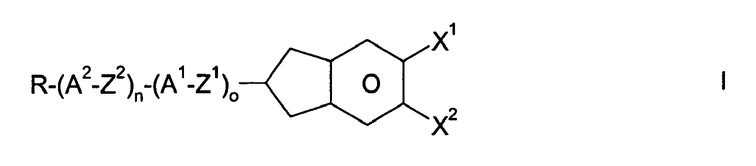 dans laquelle
R représente F, Cl, Br, I, CN, NCS, SF₅ ou un radical alkyle comportant 1 à 12 atomes de C qui est non substitué, monosubstitué par CN ou CF₃ ou mono- ou polysubstitué par halogène et où un ou deux groupes CH₂ non adjacents peuvent être remplacés par -O-, -CH=CH-, -CF=CF-, -C≡C-, -CO-, -OCO- ou -COO- de telle sorte que des atomes de O ne soient pas liés directement les uns aux autres,
A¹ et A² représentent, chacun indépendamment de l'autre, 1,4-phénylène, où, en outre, un ou deux groupes CH peut/peuvent être remplacé(s) par N et lequel peut également être mono- ou polysubstitué par L, ou trans-1,4-cyclohexylène, où, en outre, un ou plusieurs groupes CH₂ non adjacents peut/peuvent être remplacé(s) par -O- et/ou -S-, ou 1,4-cyclohexénylène, 1,4-bicyclo[2.2.2]octylène, pipéridine-1,4-diyle, naphtalène-2,6-diyle, décahydronaphtalène-2,6-diyle ou 1,2,3,4-tétrahydronaphtalène-2,6-diyle,
L représente F, Cl, Br, I, CN, NCS, SF₅ ou alkyle, alcoxy, alkylcarbonyle, alkylcarbonyloxy, alcoxycarbonyle, alkényle ou oxaalkényle comportant de 1 à 3 atomes de C, où, en outre, un ou plusieurs atome(s) de H peut/peuvent être remplacé(s) par F ou CI,
Z¹ et Z² représentent, chacun indépendamment de l'autre -CH₂O-, -OCH₂-, -CF₂O-, -OCF₂-, -COO-, -OCO-, -CF₂CF₂-, -CH₂CH₂-, -(CH₂)₄-, -(CH₂)₂O-, -O(CH₂)₃-, -CF₂CH₂-, -CH=CH-, -CH=CF-, -CF=CF-, -C≡C- ou une liaison simple,
X¹ et X² représentent, chacun indépendamment de l'autre F, Cl, Br, I, CN, NCS, SF₅ ou alkyle, alcoxy, alkylcarbonyle, alkylcarbonyloxy, alcoxycarbonyle, alkényle ou oxaalkényle comportant jusqu'à 5 atomes de C, où, en outre, un ou plusieurs atomes de H peut/peuvent être remplacé(s) par F ou Cl, l'un des radicaux X¹ et X² représente H ou R, et
n et o représentent, chacun indépendamment de l'autre 0, 1 ou 2, où n + o est ≤ 3,
et
un ou plusieurs composés choisis parmi le groupe constitué par les formules générales II, III, IV, V, VI et VII: 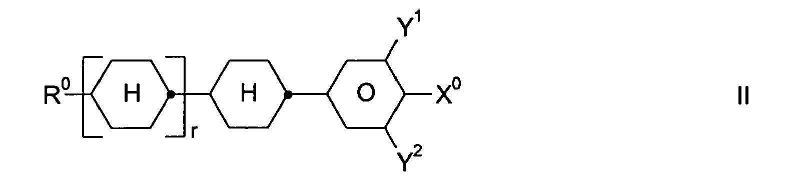 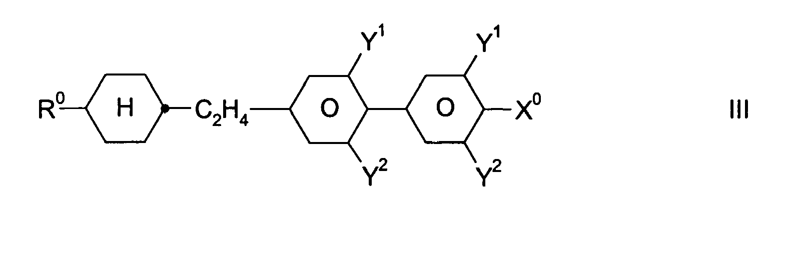 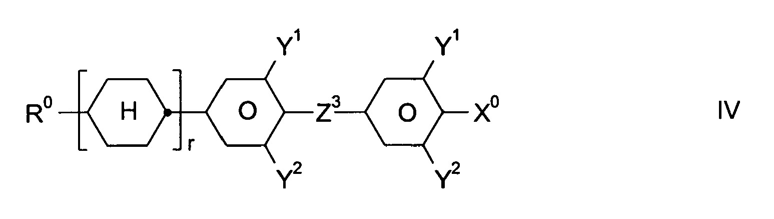 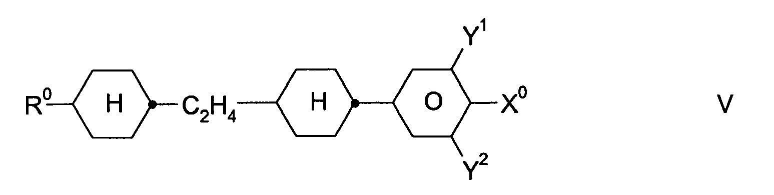 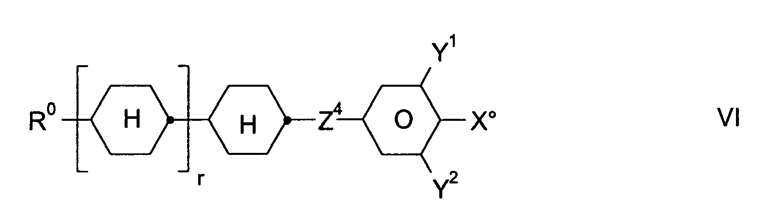 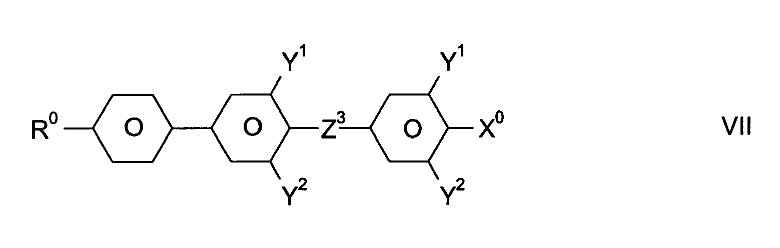 dans lesquelles
R⁰ représente n-alkyle, alcoxy, fluoroalkyle, alkényle ou oxaalkényle, chacun comportant jusqu'à 9 atomes de C,
Z³ représente -COO-, -CF₂O-, -C₂F₄- ou une liaison simple,
Z⁴ représente -COO-, -CF₂O-, -C₂F₄- ou -C₂H₄-,
X⁰ représente F, Cl, alkyle, alkényle ou alcoxy halogéné comportant de 1 à 6 atomes de C,
Y¹ et Y² représentent chacun F,
r représente 0 ou 1.

2. Milieu cristallin liquide selon la revendication 1, **caractérisé en ce qu'**il comprend un ou plusieurs composés des formules la à le: 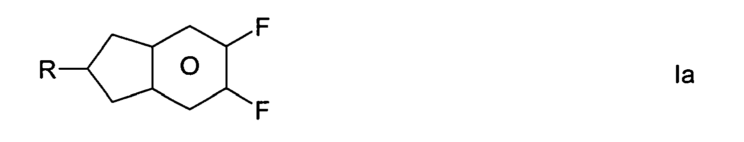 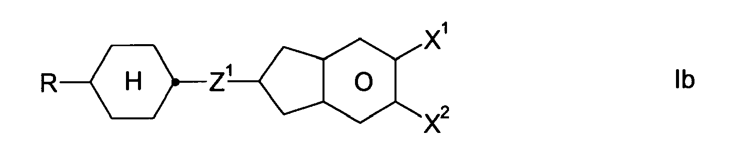 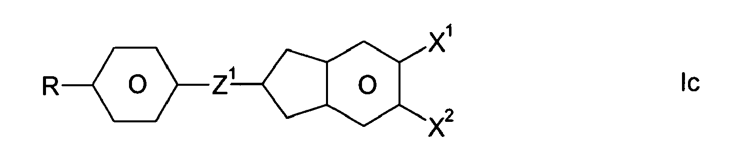 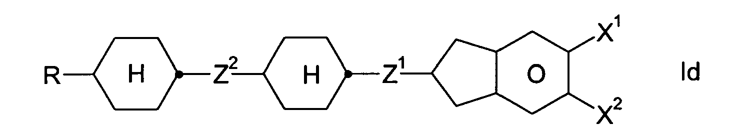 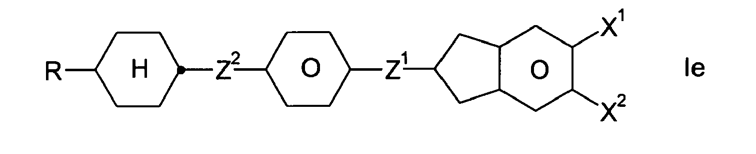 dans lesquelles
R, Z¹, X¹ et X² présentent les significations indiquées dans la revendication 1.

3. Milieu cristallin liquide selon la revendication 1 ou 2, **caractérisé en ce que,** dans la formule I, n + o représente 0 ou 1.

4. Milieu cristallin liquide selon une ou plusieurs des revendications 1 à 3, **caractérisé en ce que,** dans la formule I, X¹ et/ou X² représente(nt) F, Cl, CN, alkyle fluoré ou alcoxy fluoré, chacun comportant de 1 à 3 atomes de C.

5. Milieu cristallin liquide selon une ou plusieurs des revendications 1 à 4, **caractérisé en ce qu'**il comprend additionnellement un ou plusieurs composés choisis parmi le groupe constitué par les formules générales VIII à XIV: 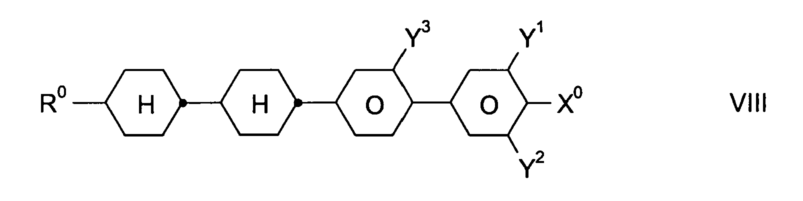 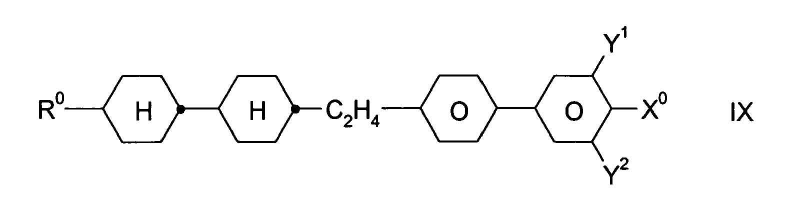 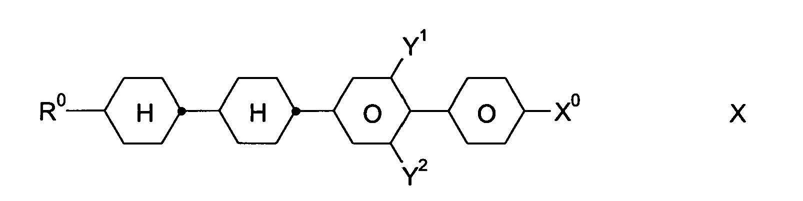 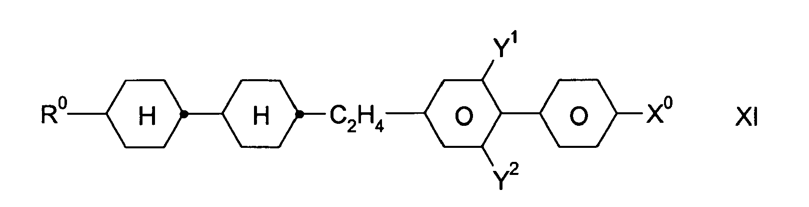 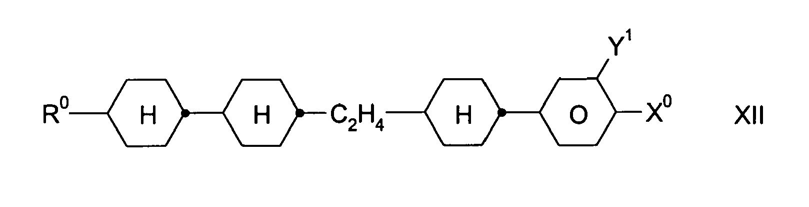 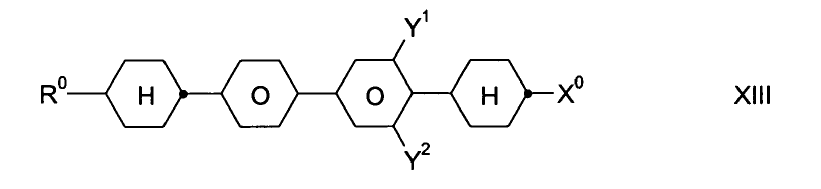 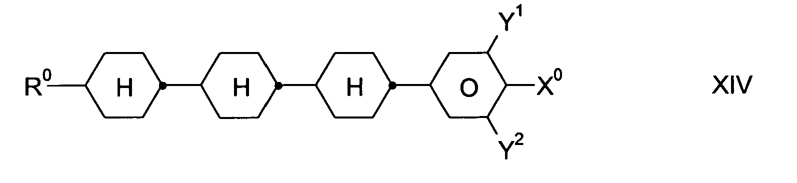 dans lesquelles
R⁰ et X⁰ présentent les significations indiquées dans la revendication 1, et
Y¹, Y² et Y³ représentent, chacun indépendamment les uns des autres, H ou F.

6. Milieu cristallin liquide selon une ou plusieurs des revendications 1 à 5, **caractérisé en ce qu'**il comprend additionnellement un ou plusieurs composés choisis parmi le groupe constitué par les formules générales XXI à XXVII: 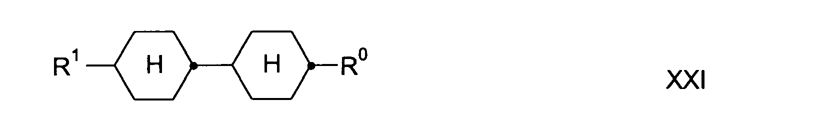 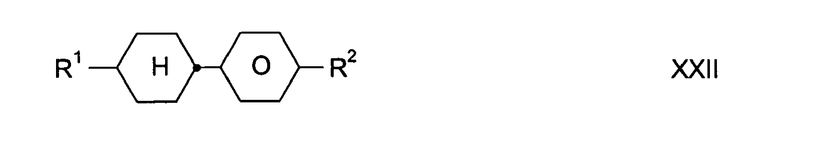 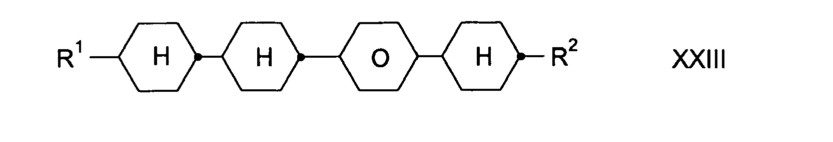 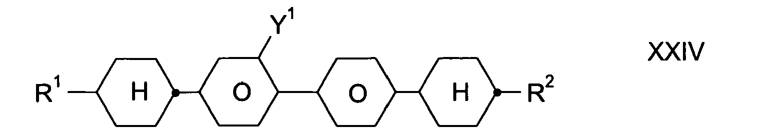 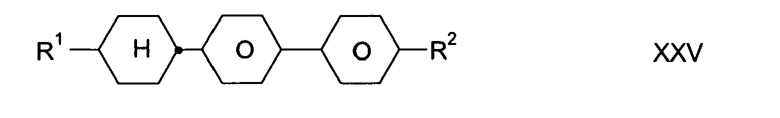 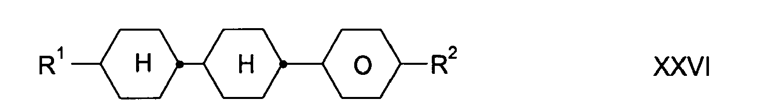 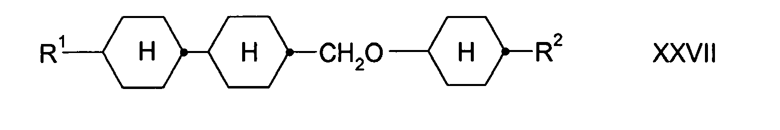 dans lesquelles R⁰ et Y¹ présentent la signification indiquée dans la revendication 5, et R¹ et R² représentent, chacun indépendamment de l'autre, alkyle ou alcoxy comportant de 1 à 8 atomes de C ou alkényle comportant de 2 à 7 atomes de C.

7. Milieu cristallin liquide selon une ou plusieurs des revendications 1 à 6, **caractérisé en ce que** la proportion de composés de la formule I dans le mélange pris dans sa globalité est de 2 à 55% en poids.

8. Milieu cristallin liquide selon une ou plusieurs des revendications 1 à 7, **caractérisé en ce que** la proportion de composés des formules I à VII dans le mélange pris dans sa globalité est d'au moins 50% en poids.

9. Utilisation du milieu cristalline liquide selon une ou plusieurs des revendications 1 à 8 à des fins électro-optiques.

10. Affichage à cristaux liquides électro-optique contenant un milieu cristallin liquide selon une ou plusieurs des revendications 1 à 8.
